# EUROPEAN PATENT APPLICATION

(11) **EP 4 472 258 A1**
(43) Date of publication of application: **04.12.2024**
(21) Application number: 23746070.4
(22) Date of filing: 16.01.2023
(51) Int. Cl.: H04W 12/00, H02J 7/00, G05B 23/02, H04W 4/80

(54) **PAIRING METHOD AND SYSTEM**

(30) Priority: 27.01.2022 CN 202210103820; 12.05.2022 CN 202210517149; 27.07.2022 CN 202210889598; 23.09.2022 CN 202211169480
(71) Applicant: Globe (Jiangsu) Co., Ltd., Changzhou, Jiangsu 213023 (CN)
(72) Inventor: ZHONG, Anlong, hangzhou, Jiangsu 213023 (CN); PENG, Zushun, hangzhou, Jiangsu 213023 (CN); ZENG, Jingtian, hangzhou, Jiangsu 213023 (CN); YUAN, Jianbo, hangzhou, Jiangsu 213023 (CN); DAI, Shaozi, hangzhou, Jiangsu 213023 (CN); WANG, Taibo, hangzhou, Jiangsu 213023 (CN)
(74) Representative: Bergenstråhle & Partners AB
(86) International application number: PCT/CN2023/072375
(87) International publication number: WO 2023/143188

(57) **Abstract**

A matching method and a system are provided. Before a data interaction between garden tools and APP, it first determines whether an encrypted matching command is received within a preset time. If yes, the received encrypted matching command is decrypted with the pre-stored decryption key to obtain the matching command. Then the matching command is decoded to obtain a key string and an encryption key, and it is verified whether the key string and the encryption key are consistent with pre-stored matching information, if yes, normal data will be interacted, otherwise, a communication connection with the APP will be immediately disconnected.

## Description

### CROSS REFERENCE TO RELATED APPLICATION

The present application is a continuation Application of PCT application No. PCT/CN2023/072375 filed on January 16, 2023, which claims the benefit of CN202210517149.1 filed on May 12, 2022, CN202210103820.8 filed on January 27, 2022, CN202210889598.9 filed on July 27, 2022, and CN202211169480.5 filed on September 23, 2022. All the above are hereby incorporated by reference for all purposes.

### TECHNICAL FIELD

The disclosure relates to a technical field of communication of garden tools, and in particular to a matching method and system.

### BACKGROUND

With the development of intelligence and Internet, more and more manual labor is replaced by intelligent products, and the use of power tools is becoming more and more extensive, such as mowers, hedge trimmers and other electric garden tools, as well as other power tools such as earth augers, drill etc.

In order to facilitate control, the conventional garden tool is usually provided with a communication function. The user establishes a communication connection with the garden tool through the application APP, adopts the APP to set the working parameters of the garden tool, and check the working state of the garden tool.

At present, the connection verification security between the garden tool and the APP is low, once the information of the mower is intercepted by an illegal user, it is easy to get the privacy of the owner, and even the mower may be illegally controlled, which causes danger to the owner.

### SUMMARY

One or more embodiments of the disclosure provide a matching method and system for solving a problem that a connection verification between garden tool and APP in the conventional art has low security and is easy to be cracked.

One or more embodiments of the disclosure provide the matching method for application programs (APP) on one hand, and the matching method includes
receiving a broadcast signal sent by a garden tool, decoding the broadcast signal, determining an identification code of the garden tool;
calling a core application programming interface API according to the identification code to obtain a key string of the garden tool;
combining the key string and an encryption key pre-stored on the APP to obtain a matching command;
receiving an input verification password, encrypting the matching command with the verification password; and
sending an encrypted matching command to the garden tool.

In an embodiment of the disclosure, the matching method further includes that the key string and the encryption key are pre-stored on a web-based information platform; and
the APP obtains and saves the encryption key from the web-based information platform by calling the API.

In an embodiment of the disclosure, combine the key string and an encryption key pre-stored on the APP to obtain a matching command includes:
performing a bit addition to the key string and the encryption key pre-stored on the APP to obtain the matching command.

In an embodiment of the disclosure, encrypting the matching command with the verification password includes:
encrypting the matching command with the verification password through an AES encryption algorithm.

In an embodiment of the disclosure, sending an encrypted matching command to the garden tool includes:
adopting a preset protocol, combining the encrypted matching command and the preset protocol into a command frame and sending the command frame to the garden tool.

Wherein, the preset protocol includes: a fixed message header and a variable message header.

One or more embodiments of the disclosure provide a matching method applied for an application program (APP) on a second hand, and the matching method includes:
receiving the encrypted matching command sent by the APP, decrypting the encrypted matching with a pre-stored decryption key command and determining the matching command;
decoding the matching command to obtain the key string and the encryption key; and
verifying whether the key string and the encryption key are consistent with a pre-stored matching information:
   if consistent, interact data with the APP;
   otherwise, disconnect a communication connection with the APP.

In an embodiment of the disclosure, the matching method further includes determining whether receiving the encrypted matching command sent by the APP within a preset time after booting:
if yes, decrypting the encrypted matching command according to the pre-stored decryption key;
if not, disconnecting the communication connection with the APP.

In an embodiment of the disclosure, decrypting the encrypted matching command with the preset decryption key includes:
decrypting the encrypted matching command with the preset decryption key through the AES encryption algorithm.

In an embodiment of the disclosure, before the data interaction between the garden tool and the APP, a matching success instruction is returned to the APP to remind the user to perform a next operation;
or, after the garden tool disconnects the communication connection with the APP, a matching identification instruction is returned to the APP to remind the user that the matching fails.

One or more embodiments of the disclosure further provide a matching system on a third hand. The matching system includes an APP and a garden tool capable of communication connection.

The APP is configured to:
receive the broadcast signal sent by the garden tool, decode the broadcast signal, determine the identification code of the garden tool;
call the core application programming interface API according to the identification code to obtain the key string of the garden tool;
combine the key string and the encryption key pre-stored on the APP to obtain the matching command;
receive the input verification password, encrypt the matching command with the verification password; and
send the encrypted matching command to the garden tool.

The garden tool is configured to:
receiving the encrypted matching command sent by the APP, decrypting the encrypted matching command with the pre-stored decryption key and obtain the matching command;
verify whether the key string and the encryption key are consistent with the pre-stored matching information:
   if consistent, interact data with the APP;
   otherwise, disconnect the communication connection with the APP.

As mentioned above, the matching method and system of one or more embodiments of the disclosure have following beneficial effects:

Before the data interaction between the garden tool and the APP of the disclosure, the verification password input by the user is used to encrypt the matching command, which ensures a security of the data interaction. Even if interactive data is captured by a third party, real and effective data cannot be obtained, which avoids a possibility of being imitated, and greatly guarantees users' safety.

### BRIEF DESCRIPTION OF THE DRAWINGS

In order to explain technical solutions of embodiments of the disclosure more clearly, the following will briefly introduce drawings used in a description of the embodiments or the conventional art. Obviously, the drawings in the following description are only some embodiments of the disclosure. For those of ordinary skill in the art, other drawings may be obtained based on these drawings without creative work.
FIG. 1 is a schematic flowchart of a matching method according to a first embodiment of the disclosure.
FIG. 2 is a schematic flowchart of the matching method according to a second embodiment of the disclosure.
FIG. 3 is another schematic flowchart of the matching method according to the second embodiment of the disclosure.
FIG. 4 is a schematic structural view of a matching system according to a third embodiment of the disclosure.
FIG. 5 is a schematic view of an application case of a management method of a battery and a garden tool according to at least one embodiment of the disclosure.
FIG. 6 is a schematic matching view of a management system with a battery according to at least one embodiment of the disclosure.
FIG. 7 is a schematic matching view of a management system , the battery and the garden tool according to at least one embodiment of the disclosure.
FIG. 8 is a structural block view of a management system according to at least one embodiment of the disclosure.
FIG. 9 is a schematic view of a user interface displaying my tool according to at least one embodiment of the disclosure.
FIG. 10 is a schematic view of a user interface displaying power and working time of a lawn mower according to at least one embodiment of the disclosure.
FIG. 11 is a schematic view of a user interface displaying information of a lawn mower according to at least one embodiment of the disclosure.
FIG. 12 is a schematic view of a user interface displaying an error list according to at least one embodiment of the disclosure.
FIG. 13 is a flowchart of a firmware update according to at least one embodiment of the disclosure.
FIG. 14 is a flowchart of a firmware update in an official upgrade mode according to at least one embodiment of the disclosure.
FIG. 15 is a flowchart of a firmware update in a custom upgrade mode according to at least one embodiment of the disclosure.
FIG. 16 is a flowchart of a replacement of a wearing component according to at least one embodiment of the disclosure.
FIG. 17 is a schematic view of a user interface displaying consumables and maintenance according to at least one embodiment of the disclosure.
FIG. 18 is a schematic view of a user interface displaying a statistic of carbon emissions according to at least one embodiment of the disclosure.
FIG. 19 is a schematic view of an application environment of a method of a remote technical support and a diagnosis of a Bluetooth IoT device according to at least one embodiment of the disclosure.
FIG. 20 is a schematic flowchart of a method of a remote technical support and a diagnosis of a Bluetooth IoT device according to at least one embodiment of the disclosure.
FIG. 21 is a block view of a device of the remote technical support and the diagnosis of the Bluetooth IoT device according to at least one embodiment of the disclosure.
FIG. 22 is a schematic structural view of a test device according to at least one embodiment of the disclosure.
FIG. 23 is a schematic flowchart of a test method according to at least one embodiment of the disclosure.
FIG. 24 is a schematic structural view of a first terminal of a test device according to at least one embodiment of the disclosure.
FIG. 25 is a schematic structural view of a pairing module of a first terminal of the test device according to at least one embodiment of the disclosure.
FIG. 26 is a schematic structural view of a second terminal of a test device according to at least one embodiment of the disclosure.
FIG. 27 is a schematic flowchart of a second determination module of a second terminal of a test device according to at least one embodiment of the disclosure.

### DETAILED DESCRIPTION

The following describes the implementation of the disclosure through specific embodiments, and those skilled in the art can easily understand other advantages and effects of the disclosure from the content disclosed in this specification. The disclosure may also be implemented or applied through other different specific embodiments. Various details in this specification may also be modified or changed based on different viewpoints and applications without departing from the disclosure. It should be noted that, the following embodiments and the features in the embodiments can be combined with each other without conflict.

It should be noted that drawings provided in the embodiments are only illustrative of a basic idea of the disclosure. The drawings only show assemblies related to the disclosure instead of drawing according to the number, shape and size of the assemblies in actual implementation. In actual implementation, the type, quantity and ratio of each assembly may be changed at will, and a layout of the assemblies may also be more complicated.

A first embodiment of the disclosure provides a matching method. The matching method is applied in an application (APP). APP refers to third-party applications installed on electronic devices. According to its application scope, it may be classified into shopping APPs, map APPs, game APPs, learning APPs and social APPs, etc. According to different application platforms, it may be classified into iOS system APP, Android system APP, and Microsoft system APP, etc. After the APP is installed on the electronic device, a corresponding text file directory will be generated for storing running files and download files of the APP. The APP in this embodiment is an application program developed based on garden tools. The APP may establish a communication connection with the garden tool through a communication module of the electronic device. After the communication connection is successful, a user may set parameters for the garden tool, or check working data and working states of the garden tool through the APP. In order to ensure a security of a matching of the APP with the garden tool, a matching command in this embodiment is encrypted. In this way, even if it is captured by a third party, real valid data cannot be obtained to avoid being copied. It should be understood that the electronic device in this embodiment may be a common terminal with communication functions such as a mobile phone, a tablet computer, a desktop or a laptop in the conventional art, and the electronic device and the garden tool may be connected wirelessly using wireless networks such as Wireless Fidelity (WiFi), Bluetooth Low Energy (BLE), and Ultra Wide Band (UWB). In addition, in another embodiment, a Universal Serial Bus (USB) may also be used to implement a wired connection between the electronic device and the garden tool. The following uses the BLE as an example to illustrate.

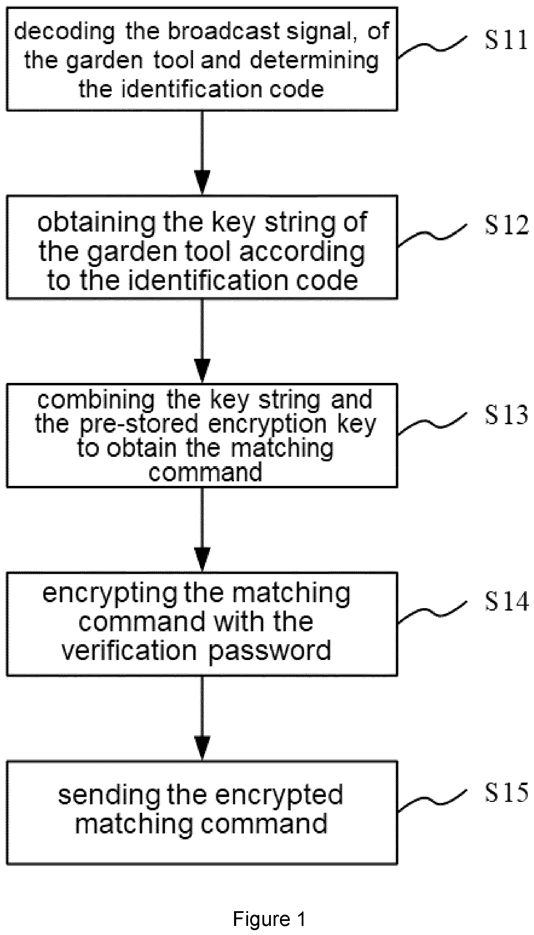

Please refer to FIG. 1. FIG. 1 is a schematic flowchart of a matching method according to the first embodiment of the disclosure, and the method mainly includes S11 to S15:

S11, receiving a broadcast signal sent by the garden tool, decoding the broadcast signal, and determining the identification code of the garden tool.

In an embodiment, the electronic device and the garden tool are provided with Bluetooth chips that are used to realize wireless communication functions. After the Bluetooth chip of the garden tool is powered on, the broadcast signal is issued cyclically. Correspondingly, the user turns on the APP on the electronic device. After the APP is started, it periodically performs a Bluetooth scanning, sends connection requests, and detects to surrounding broadcast channel messages. When the APP receives the broadcast signal of the garden tool, the APP and the garden tool establish a communication connection according to agreed initial information and conduct a matching verification after the connection. In an embodiment, the initial information includes using a key matching information and an encryption algorithm starting index in a matching process.

Continuing to explain, the APP decodes the received broadcast signal based on the agreed initial information and determines an identification code of the garden tool. It should be understood that each garden tool carries a specific identification code when it leaves a factory. The identification code may be a serial number SN or a Media Access Control (MAC) address of the garden tool.

S12, calling a core application programming interface API according to the identification code to obtain a key string of the garden tool.

In an embodiment, after the APP determines the identification code of the garden tool, it calls the API based on the identification code and obtains the key string of the garden tool from a web-based information platform. It should be understood that the web-based information platform may provide customers with business processing tracking functions, inventory and sales tracking functions, website building and hosting functions, accounting functions, data storage functions and/or various other functions as needed. The API is installed on a client device and provides a user interface through which the user may access different functions of the web-based information platform. In this embodiment, each verification parameter required in a verification process may be generated according to a preset first rule and pre-stored on the web-based information platform. The above verification parameters may be called through the API during use. In an embodiment, the verification parameters include the key string of each garden tool and an encryption key of the APP. It should be understood that there are many ways to generate keys in the conventional art, such as using passwords to generate keys or using random numbers to generate keys. The disclosure does not limit a specific implementation of the preset first rule. In addition, the verification parameters may be preset or dynamically generated from a cloud digital key system.

S13, combining the key string and the encryption key pre-stored on the APP to obtain the matching command.

In an embodiment, the encryption key pre-stored on the APP is obtained and saved from the web-based information platform by calling the API. In an embodiment, the encryption key may also be obtained by the APP through calling the API in real time according to matching needs.

Continuing to explain, the APP combines the key string and the encryption key pre-stored on the APP according to a preset second rule, and obtains the matching command. In an embodiment, the preset second rule includes: performing a bit addition on the key string and the encryption key pre-stored on the APP to obtain the matching command. In another embodiment, the preset second rule may also be to insert the key string into the encryption key according to a preset order to obtain the matching command. It should be understood that this preset second rule is applicable to both the APP and the garden tool, and subsequently the garden tool should use the same preset second rule when decoding the matching command.

S14, receiving an input verification password and encrypting the matching command with the verification password.

In an embodiment, each garden tool is provided with a verification password for matching when it leaves the factory. The user inputs the verification password in the APP, the APP uses the verification password to encrypt the matching command, and the encrypted matching command is obtained. It should be understood that there is a plurality of encryption methods in conventional technology, such as an AES encryption algorithm (Advanced Encryption Standard, AES) and a DES encryption algorithm (Data Encryption Standard, DES) among symmetric encryption algorithms. In this embodiment, the AES encryption algorithm is adopted and the matching command is encrypted through using the verification password. It should be understood that the AES algorithm is one of the symmetric encryption algorithms. A same key is used for encryption and decryption. The AES algorithm is a block cipher. The block cipher is to block a plaintext into groups, and each group is of equal length. A group of data is encrypted at a time until an entire plaintext is encrypted. In an AES standard specification, a blocking length may only be 128 bits, which means that each block is 16 bytes (8 bits per byte). A length of the key may be 128 bits, 192 bits or 256 bits.

S15, sending the encrypted matching command to the garden tool.

In an embodiment, the APP uses a preset protocol to form a command frame with the encrypted matching command and the preset protocol, and sends it to the garden tool. In an embodiment, the preset protocol includes: a fixed message header and a variable message header. Further, the preset protocol in this embodiment may be an MQTT protocol, and the MQTT protocol further includes a message body. The fixed header exists in all MQTT data packets and indicates a data packet type and a grouping class identifier of the data packet. The Variable header exists in some MQTT data packets. The data packet type determines whether the variable header exists and its specific content. The message body exists in some MQTT data packets and represents specific content received by the client. The message body in this embodiment is the encrypted matching command.

Further, the garden tool receives the encrypted matching command, decrypts it and compares it with the pre-stored matching information. If they are consistent, the matching command is considered legal and a matching success instruction is returned to the APP. After the APP receives the matching success instruction transferred by the garden tool, it may start a normal data interaction with the garden tool.

It may be seen that, before the data interaction between the garden tool and the APP of the embodiment, the verification password input by the user is used to encrypt the matching command, which ensures a security of the data interaction. Even if interactive data is captured by the third party, real and effective data cannot be obtained, which avoids a possibility of being imitated, and greatly guarantees users' safety.

A second embodiment of the disclosure provides a matching method. The matching method is applied to the garden tools. This garden tool is provided with the communication function and may establish the communication connection with the APP after powering on. It should be understood that, the APP is the application program developed based on garden tools and is the third-party application installed on the electronic devices. The APP may establish the communication connection with the garden tool through the communication module of the electronic device. After the communication connection is successful, the user may set parameters for the garden tool, or check the working data and the working states of the garden tool through the APP. In order to ensure the security of the matching of the APP with the garden tool, the matching command in this embodiment is encrypted. In this way, even if it is captured by the third party, the real valid data cannot be obtained to avoid being copied. It should be understood that the electronic device in this embodiment may be the common terminal with communication functions such as the mobile phone, the tablet computer, the desktop or the laptop in the conventional art, and the electronic device and the garden tool may be connected wirelessly using wireless networks such as Wireless Fidelity (WiFi), Bluetooth Low Energy (BLE), and Ultra Wide Band (UWB). In addition, in another embodiment, the Universal Serial Bus (USB) may also be used to implement the wired connection between the electronic device and the garden tool. The following uses the BLE as an example to illustrate.

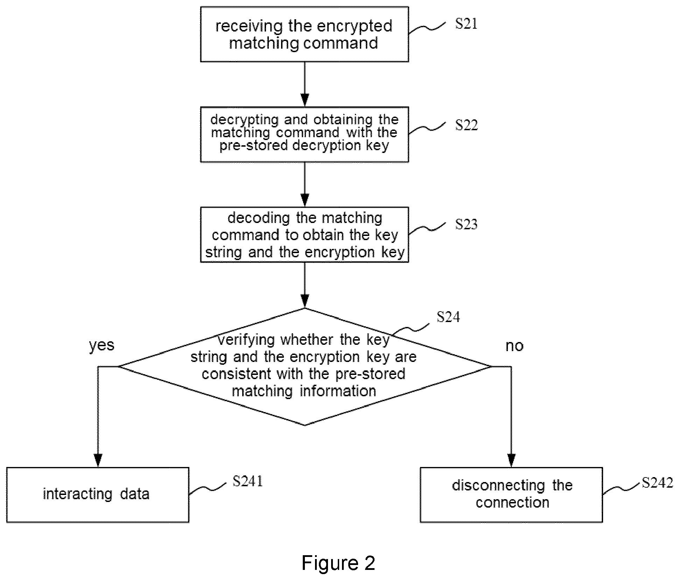

Please refer to FIG. 2. FIG. 2 is a schematic flowchart of the matching method according to the second embodiment of the disclosure, and the method mainly includes S21 to S24:
S21, receiving the encrypted matching command sent by the APP;
S22, decrypting the encrypted matching command with the pre-stored decryption key and obtaining the matching command;
S23, decoding the matching command to obtain the key string and the encryption key; and
S24, verifying whether the key string and the encryption key are consistent with the pre-stored matching information:
   S241, if consistent, interacting data with the APP;
   S242, if not, disconnecting the communication connection with the APP.

In an embodiment, the electronic device and the garden tool are provided with the Bluetooth chips that are used to realize the wireless communication functions. After the Bluetooth chip of the garden tool is powered on, the broadcast signal is issued cyclically. Correspondingly, the user starts the APP on the electronic device. After the APP is started, it periodically performs the Bluetooth scanning, sends the connection requests, and listens to the surrounding broadcast channel messages. When the APP receives the broadcast signal of the garden tool, the APP and the garden tool establish the communication connection according to the agreed initial information and conduct the matching verification after the connection. In an embodiment, the initial information includes using the key matching information, a communication protocol and the encryption algorithm starting index in a matching process.

Continuing to explain, after the garden tool obtains the encrypted matching command, it uses the pre-stored decryption key to decrypt it. It should be understood that the garden tool further includes a storage module for storing the decryption key. In an embodiment, the decryption key should be agreed in advance and stored in the storage module, and the decryption key is the same as the verification password input by the user in the first embodiment. Correspondingly, in this embodiment, the AES encryption algorithm is used to decrypt the encrypted matching command to obtain the matching command. The garden tool decodes the matching command according to a preset third rule and obtains the key string and the encryption key. In an embodiment, the preset third rule corresponds to the preset second rule in the first embodiment. For example, in the first embodiment, the APP uses the preset order to insert the key string into the encryption key. When decoding, the garden tool uses the same preset order to extract the key string from the encryption key, thereby obtaining the key string and the encryption key. Theoretically, if the communication connection between the APP and the garden tool is legal, the decoded key string and encryption key should be consistent with the pre-stored matching information in the garden tool. The garden tool verifies the key string and the encryption key. If they are consistent with the pre-stored matching information, data will be interacted with the APP normally. The user may view the working data and working states of the garden tool through the APP interface. If they are inconsistent, an access of the APP is considered illegal and the communication connection with the APP is immediately disconnected. Further, after confirming that the connected APP is a legal connection, the garden tool returns the matching success command to the APP, prompting the user to proceed to the next operation. Otherwise, it returns the matching identification command to the APP to remind the user that matching failed and needs to be matched again. It should be understood that the garden tool uses the same preset protocol as in the first embodiment to interact with the APP.

Further, the garden tool decrypts the encrypted matching command. If the decryption is successful, the garden tool will continue to decode the matching command. If the decryption fails, the communication connection with the APP will be disconnected.

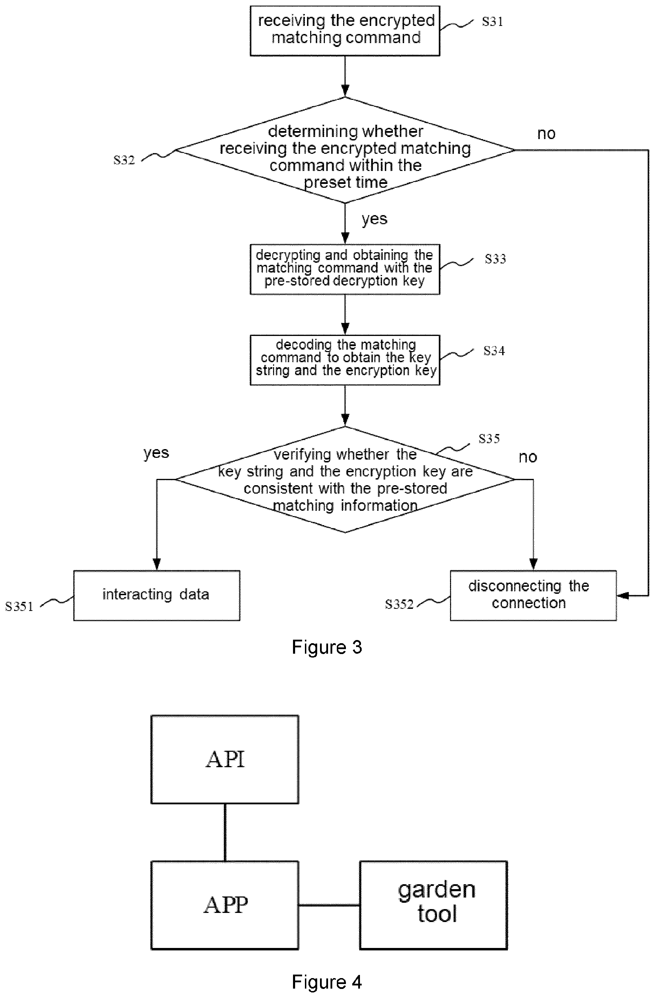

Please refer to FIG. 3. FIG. 3 is another schematic flowchart of a matching method according to the second embodiment of the disclosure, and the method mainly includes S31 to S35:
S31, receiving the encrypted matching command sent by the APP;
S32**,** determining whether receiving the encrypted matching command sent by the APP within a preset time after booting, if yes, executing S33, otherwise, executing S252.
S33, decrypting the encrypted matching command with the pre-stored decryption key and obtaining the matching command;
S34, decoding the matching command to obtain the key string and the encryption key; and
S35, verifying whether the key string and the encryption key are consistent with the pre-stored matching information:
   S251, if consistent, interacting data with the APP;
   S252, if not, disconnecting the communication connection with the APP.

It may be seen that a difference between FIG. 3 and FIG. 2 is that, in order to improve a matching security, the garden tool further detects whether it has received the encrypted matching command sent by the APP within the preset time after powering on. In the embodiment, the preset time is five minutes.

It may be seen that, before the garden tool performs the data interaction with the APP, it first determines whether the encrypted matching command is received within the preset time. if yes, the pre-stored decryption key is used to decrypt the received encrypted matching command to obtain the matching command. Then the matching command is decoded to obtain the key string and the encryption key, and it is verified whether the key string and the encryption key are consistent with pre-stored matching information, if yes, the data will be interacted normally, otherwise, the communication connection with the APP will be immediately disconnected. This ensures the security of the data interaction, even if interactive data is captured by the third party, the real and effective data cannot be obtained, which avoids the possibility of being imitated, and greatly guarantees users' safety.

Please refer to FIG. 4. The third embodiment of the disclosure provides a matching system. The matching system includes an APP and the garden tool that can be communicatively connected. In an embodiment, the APP in this embodiment is the application program developed based on the garden tools. The APP may establish the communication connection with the garden tool through the communication module of the electronic device. After the communication connection is successful, the user may set parameters for the garden tool, or check working data and working states of the garden tool through the APP. In order to ensure the security of the matching of the APP with the garden tool, the matching command in this embodiment is encrypted. In this way, even if it is captured by the third party, the real valid data cannot be obtained to avoid being copied. It should be understood that the electronic device in this embodiment may be the common terminal with communication functions such as the mobile phone, the tablet computer, the desktop or the laptop in the conventional art, and the electronic device and the garden tool may be connected wirelessly using wireless networks such as Wireless Fidelity (WiFi), Bluetooth Low Energy (BLE), and Ultra Wide Band (UWB). In addition, in another embodiment, the Universal Serial Bus (USB) may also be used to implement the wired connection between the electronic device and the garden tool. The following uses the BLE as an example to illustrate.

To further explain, the APP corresponds to the matching method in the first embodiment, and the APP is used for:
receiving the broadcast signal sent by the garden tool, decoding the broadcast signal, and determining the identification code of the garden tool;
calling the core application programming interface API according to the identification code to obtain the key string of the garden tool;
combining the key string and the encryption key pre-stored on the APP to obtain the matching command;
receiving the input verification password and encrypting the matching command with the verification password; and
sending the encrypted matching command to the garden tool.

**To** further explain, the garden tool corresponds to the matching method in the second embodiment, and the garden tool is used for:
after receiving the encrypted matching command sent by the APP, decrypting the encrypted matching command with the pre-stored decryption key and obtaining the matching command; and
verifying whether the key string and the encryption key are consistent with the pre-stored matching information:
   if consistent, interacting data with the APP;
   otherwise, disconnecting the communication connection with the APP.

In summary, the disclosure provides the matching method and the system. Before the data interaction between garden tools and APP, it first determines whether the encrypted matching command is received within the preset time. If yes, the pre-stored decryption key is used to decrypt the received encrypted matching command to obtain the matching command. Then the matching command is decoded to obtain the key string and the encryption key, and it is verified whether the key string and the encryption key are consistent with pre-stored matching information, if yes, normal data will be interacted, otherwise, the communication connection with the APP will be immediately disconnected. This ensures the security of the data interaction, even if interactive data is captured by the third party, the real and effective data cannot be obtained, which avoids the possibility of being imitated, and greatly guarantees users' safety.

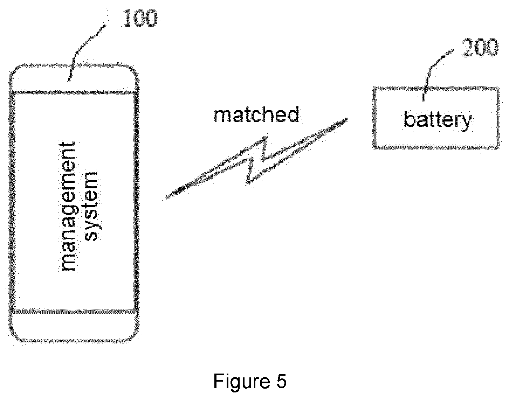

Please refer to FIG. 5 through FIG. 8. In this embodiment, the disclosure provides a management method of a battery and the garden tool, and a system of the battery and the garden tool to improve a problem that traditional smart garden tools cannot tell users accurate error information, cannot intelligently update a firmware, and cannot bring new functions included in new firmware to users, which causes that only new tools may be purchased and results in a waste of resources. It may also improve a problem that the traditional garden tools cannot calculate how long the battery in the tool can be used, and since there is no energy-saving mode, when the garden tool work is completed, the garden tool will continue to communicate with a server, thereby increasing a battery consumption and shortening a battery life. The APP or the electronic device in the aforementioned embodiments includes a management system 100. A matching module of the management system may be matched with the battery 200 and/or the garden tools using the aforementioned matching method. Of course, the conventional matching method may also be used. The garden tool in this embodiment is a power tool. In an embodiment, the management system 100 includes the matching module 10, an information checking module 20, a connection checking module 30, an upgrade module 40 and an interface display module 50. In an embodiment, the matching module 10 is used to match the management system 100 with the battery 200 and/or the garden tool to establish a communication between the management system 100 and the battery 200 and/or the garden tool. The information checking module 20 is used to send a checking instruction to the battery and/or the garden tool to obtain first information of the battery and/or the garden tool after the management system is matched with the battery and/or the garden tool, determine whether a state of the battery 200 and/or the garden tool is normal, and display it on the user interface. The connection checking module 30 is used to send the checking instructions to the battery to determine whether the battery 200 is connected to the garden tool or a charger. The upgrade module 40 is configured to update a firmware of the battery and/or the garden tool by sending a firmware upgrade instruction to the battery 200 and/or the garden tool to. The interface display module 50 is used to display the first information and the state of the battery 200 and/or the garden tool, whether the battery is connected to the garden tool or the charger, and an update progress of the firmware of the battery and/or the garden tool.

Please refer to FIG. 5 through FIG. 8. In this embodiment, the management method includes:
Matching the management system with the battery and/or the garden tool through the matching module 10 to establish the communication between the management system and the battery and/or the garden tool, so as to facilitate a data transmission between the management system 10 and the battery and/or the garden tool. For example, the management system may be matched with the battery and/or the garden tool through the Bluetooth to establish the communication. Alternatively, a wireless communication device of the management system and a wireless communication device of the battery and/or the garden tool communicate with each other on a network to establish the communication. A communication method between the management system and the battery and/or the garden tool includes but is not limited to radio waves, Bluetooth, NFC (Near Field Communication), Wifi, ZigBee, LoRa (Long Range Radio), LoRaWAN, Sigfox et al.

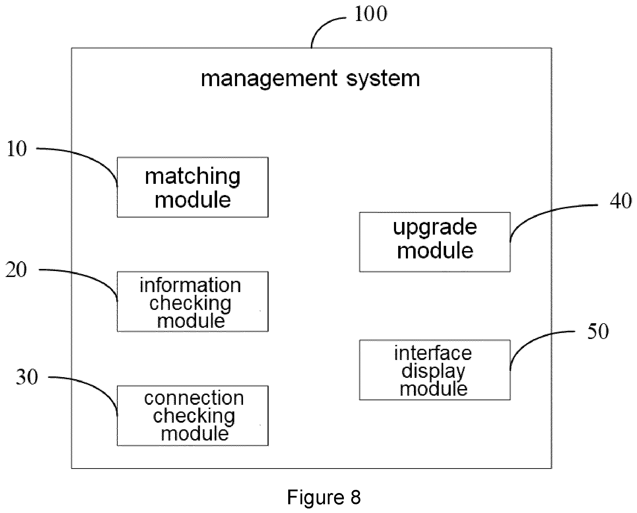

Please refer to FIG. 5 and FIG. 8. In this embodiment, the management system and the battery are directly matched to establish the communication. Then the battery is connected with the garden tool to establish the communication between the battery and the garden tool, thereby realizing the communication and the data transmission between the management system and the garden tool.

It should be noted that, in each management method of the following embodiments, the management system sends corresponding instructions to the battery and/or the garden tool to perform corresponding actions, all of which are based on a completion of the matching and an establishment of communication between the management system and the battery and/or the garden tool.

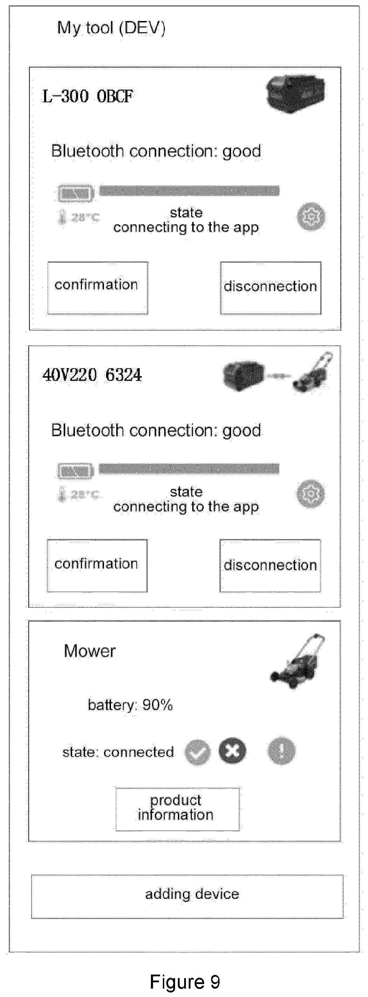

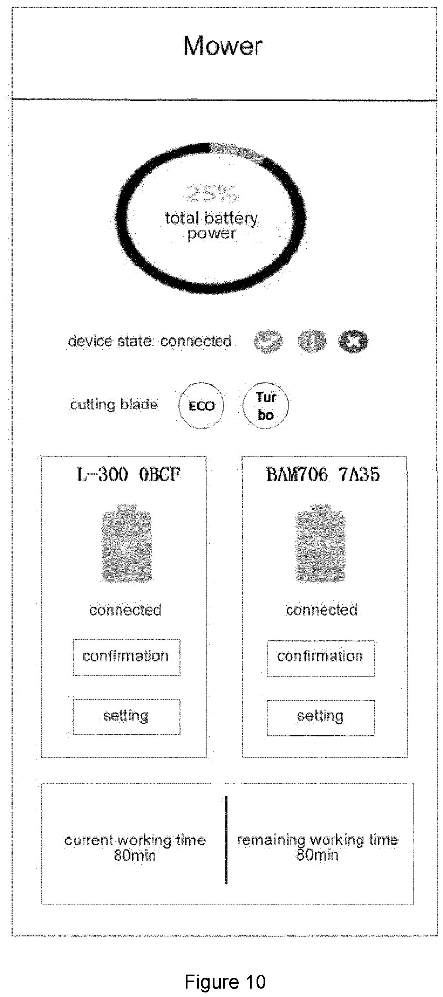

Please refer to FIG. 5 through FIG. 10. In this embodiment, the management method includes:
after matching and establishing the communication between the management system and the battery and/or the garden tool, the information checking module 20 in the management system sending the checking instruction to the battery and/or the garden tool to obtain the first information of the battery and/or the garden tool, determining whether the state of the battery and/or the garden tool is normal, feeding back a normality or an abnormality of the state and the first information to the management system, and displaying them in the user interface through the interface display module 50.

Please refer to FIG. 5 through FIG. 10. In this embodiment, the management system sends the checking instruction to the battery to obtain the first information of the battery, such as information of a temperature of the battery, power of the battery, and locked state of the battery, and determines whether the current state of the battery is normal. The information such as the temperature of the battery, the power of the battery, and the locked state of the battery are displayed on the user interface through the interface display module 50, and at the same time, the normality or the abnormality of the current state of the battery is displayed.

Please refer to FIG. 5 through FIG. 10. In this embodiment, the management system may send the checking instruction to the garden tool to obtain the first information of the garden tool, such as information of a total power, a cutting mode, a motor state, a state of an angle sensor, a velocity, current continuous working time, and working time of remaining power of the garden tool, and determines whether the current state of the garden tool is normal. The information such as the total power, the cutting mode, the current continuous working time, and the working time of remaining power of the garden tool are displayed on the user interface through the interface display module 50, and at the same time, the normality or the abnormality of the state of the garden tool and a time when the abnormality occurred are displayed.

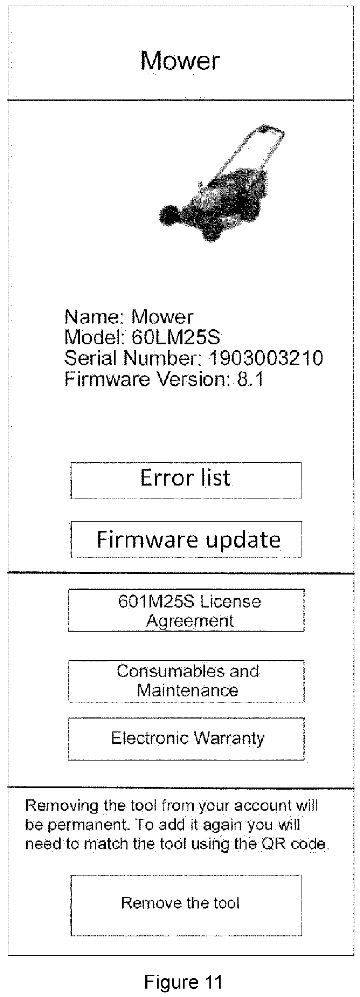

For example, please refer to FIG. 11. Detailed information of the current garden tool is displayed on the user interface, which includes a name, a model, a serial number, a firmware version, etc.

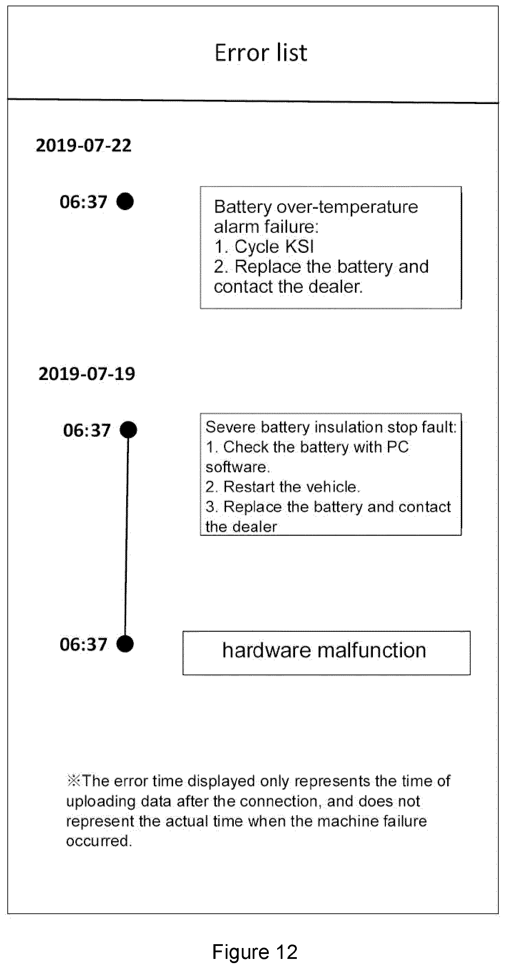

For example, please refer to FIG. 12. An error list is displayed on the user interface, and the error list records the abnormality of the garden tool and/or the battery and the time when the abnormality occurred in detail.

From the above embodiments, the management system may enable users to intuitively view and check relevant information and state of the battery and/or garden tools. If there is an error in the battery and/or the garden tool, the user may be notified in time through the management system to improve its safety, which helps the user make better use of the garden tool.

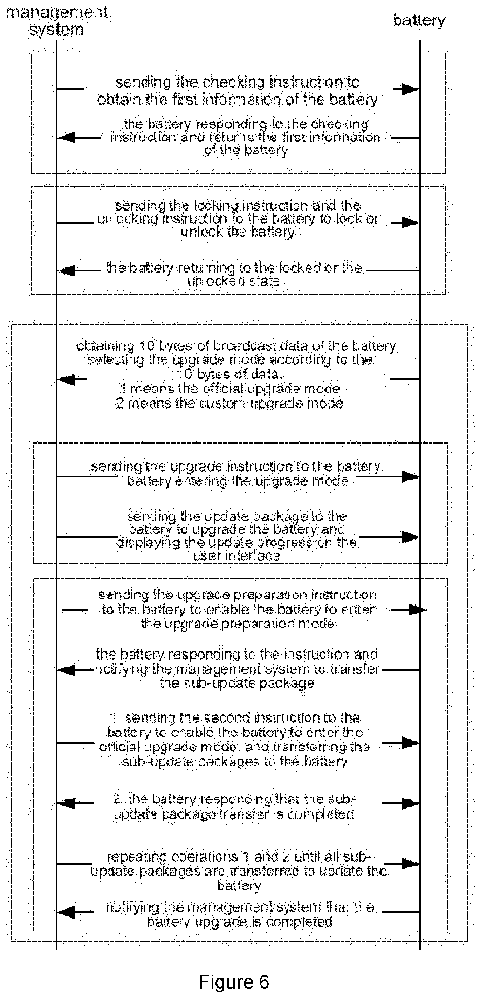

Please refer to FIG. 6, FIG. 7 and FIG. 9. In this embodiment, the management system may further send a locking instruction and an unlocking instruction to the battery to lock or unlock the battery. And whether the battery is in a locked state or an unlocked state is displayed on the user interface through the interface display module 50, which facilitates the user to individually control the battery.

Please refer to FIG. 6, FIG. 7 and FIG. 9. In this embodiment, the management method further includes:
**the** management system sending the checking instruction to the battery to obtain a connecting state of the battery and the garden tool or a connecting state of the battery and the charger through the connection checking module 30. For example, if the battery is not connected with the garden tool, only the information and the state of the battery are displayed on the user interface through the interface display module 50. If the battery is connected with the garden tool, the information and state of the battery and the garden tool connected to the battery are displayed on the user interface through the interface display module 50.

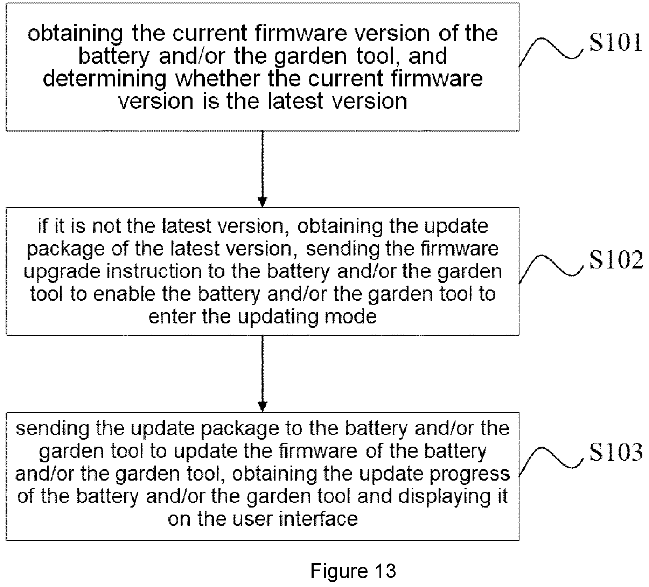

Please refer to FIG. 6, FIG. 7 through FIG. 11 and FIG. 13. In this embodiment, the management method further includes:
the management system updating the firmware of the battery and/or the garden by sending the firmware upgrade instruction to the battery and/or the garden tool through the upgrade module . In an embodiment, updating the firmware of the battery and/or the garden tool includes S101 to S103.

S101, obtaining the current firmware version of the battery and/or the garden tool, and determining whether the current firmware version is a latest version. For example, a version checking instruction may be sent to the battery and/or the garden tool through the upgrade module 40 to obtain the current firmware version of the battery and/or the garden tool and determine whether the current version is the latest version.

S102, if it is not the latest version, obtaining an update package of the latest version, sending the firmware upgrade instruction to the battery and/or the garden tool to enable the battery and/or the garden tool to enter an updating mode. For example, the latest version of the update package may be obtained from the server through the upgrade module 40, and the firmware upgrade instruction may be sent to the battery and/or the garden tool, so that the battery and/or the garden tool enters the updating mode.

S103, updating the firmware of the battery and/or the garden tool by sending the update package to the battery and/or the garden tool, obtaining the update progress of the battery and/or the garden tool and displaying it on the user interface. For example, the obtained update package with the latest version is sent to the battery and/or the garden tool through the upgrade module 40, the battery and/or the garden tool automatically updates after receiving an entire content of the update package, and the update progress of the battery and/or the garden tool is displayed on the user interface through the interface display module 50.

Please refer to FIG. 6, FIG. 7 through FIG. 11, FIG. 14 and FIG. 15. In this embodiment, the upgrade mode of the battery and/or the garden tool includes an official upgrade mode and a custom upgrade mode.

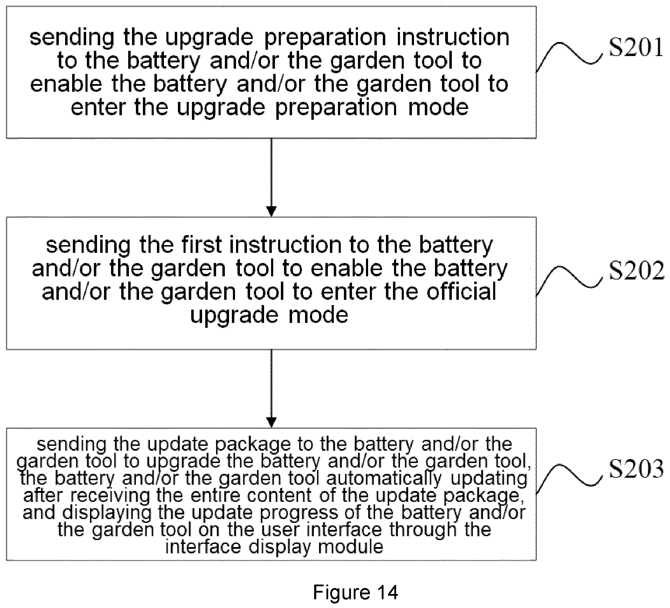

Please refer to FIG. 14. If it is the official upgrade mode, the update process of the firmware includes:
S201, the management system sending the upgrade preparation instruction to the battery and/or the garden tool through the upgrade module to enable the battery and/or the garden tool to enter an upgrade preparation mode;
S202, the upgrade module 40 sending a first instruction to the battery and/or the garden tool to enable the battery and/or the garden tool to enter the official upgrade mode; and
S203, the upgrade module 40 sending the update package to the battery and/or the garden tool to upgrade the battery and/or the garden tool, the battery and/or the garden tool automatically updating after receiving the entire content of the update package, and displaying the update progress of the battery and/or the garden tool on the user interface through the interface display module 50.

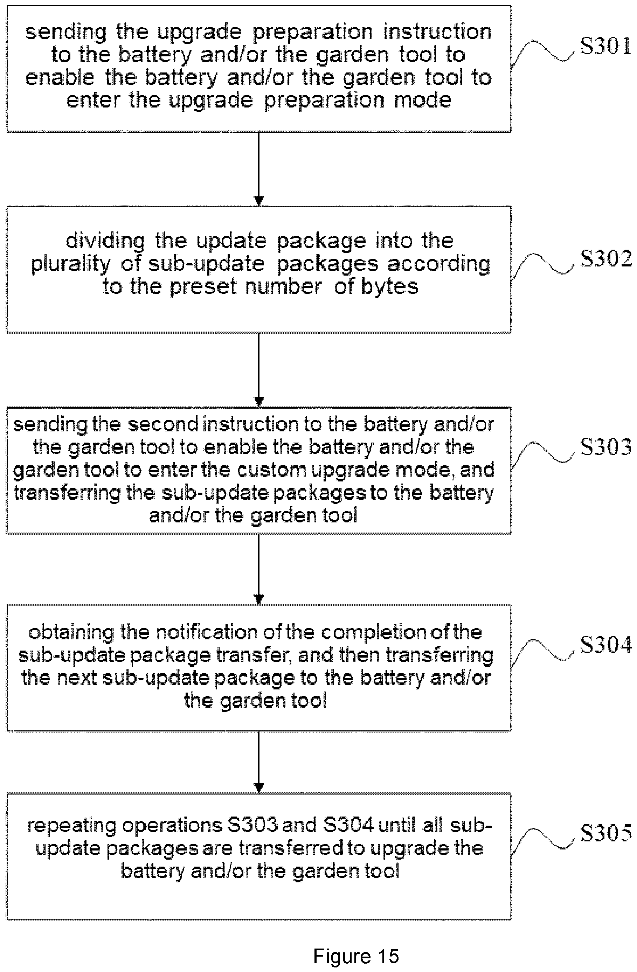

Please refer to FIG. 15. If it is the custom upgrade mode, the update package is divided into a plurality of sub-update packages according to a preset number of bytes. The sub-update packages are transferred to the battery and/or garden tools one by one until all sub-update package transmissions are completed to improve a stability of an update package transmission process, thereby ensuring the smooth completion of the update process and avoiding data loss caused by a disconnection in a transmission process. In an embodiment, the update progress of the firmware includes:
S301, the management system sending the upgrade preparation instruction to the battery and/or the garden tool through the upgrade module 40 to enable the battery and/or the garden tool to enter the upgrade preparation mode;
S302, the upgrade module 40 dividing the update package into the plurality of sub-update packages according to the preset number of bytes;
S303, the upgrade module 40 sending a second instruction to the battery and/or the garden tool to enable the battery and/or the garden tool to enter the custom upgrade mode, and transferring the sub-update packages to the battery and/or the garden tool;
S304, obtaining a notification of a completion of the sub-update package transfer, and then transferring the next sub-update package to the battery and/or the garden tool; and
S305, repeating operations S303 and S304 until all sub-update packages are transferred to upgrade the battery and/or the garden tool. In an embodiment, after the transmission of all sub-update packages is completed, the upgrade module sends a transmission completion notification to the battery and/or the garden tool to notify the battery and/or the garden tool that the update package transmission is completed. The battery and/or the garden tool are upgraded according to the update package.

It should be noted that, in the update progress of the battery and/or the garden tool, the update progress of the battery and/or the garden tool is displayed on the user interface through the interface display module 50.

It should be noted that, before updating and upgrading the battery and/or the garden tool, it is necessary to obtain 10 bytes of broadcast data of the battery through the upgrade module 40. The upgrade mode is selected according to the 10 bytes of data. If it is 1, the official upgrade mode is selected. If it is 2, the custom upgrade mode is selected.

In some other embodiments, during the update process of the garden tool, instructions and the update package in the update process need to be sent to the battery first, and then forwarded to the garden tool through the battery, so as to realize the update and upgrade of the garden tool.

From the above embodiments, the management system may upgrade the firmware of the battery and/or garden tools, which avoids the problems that the traditional garden tools cannot update firmware intelligently and cannot bring new functions included in new firmware to users, and only new tools may be purchased, thus causing a waste of resources. And the update progress of the battery and/or the garden tool may be displayed on the user interface to facilitate the user to better utilize the garden tool.

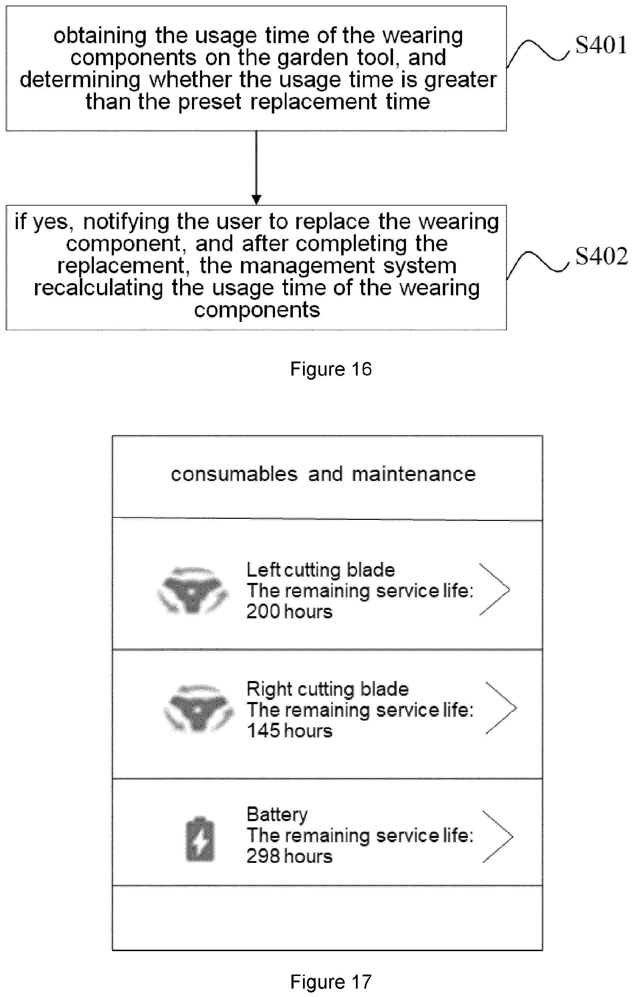

Please refer to FIG. 6, FIG. 7, FIG. 16 and FIG. 17. In this embodiment, the management method further includes S401 and S402.

S401, obtaining a usage time of wearing components on the garden tool, and determining whether the usage time is greater than a preset replacement time.

Please refer to FIG. 6, FIG. 7, FIG. 16 and FIG. 17. The usage time of a certain wearing component on the garden tool is obtained through the information checking module 20. The usage time is calculated from a first use of the wearing component, and it is determined whether the usage time is greater than the preset replacement time. In this embodiment, the preset replacement time is set to 15 days, for example. It should be noted that, in some other embodiments, a time when the garden tools are not in use shall not be counted as the usage time.

S402, if yes, notifying the user to replace the wearing component, and after completing the replacement, the management system recalculating the usage time of the wearing components.

Please refer to FIG. 6, FIG. 7, FIG. 16 and FIG. 17. If the usage time is greater than the preset replacement time, the user is notified to replace the wearing component, and after the replacement is completed, the management system is notified that the replacement of the wearing component is completed, so that the management system recalculates the usage time of the wearing component, and displays the usage time of the wearing component in the user interface through the interface display module 50. For example, a consumables and maintenance interface is displayed on the user interface, and a current situation or remaining life of each component is recorded in detail in the consumables and maintenance interface to remind the user to replace it in time.

From the above embodiments, the management system may display the usage time of the wearing components in the user interface, so that the user may intuitively view the usage time of each wearing component, and the user can be promptly reminded to replace it, which helps the users make better use of the garden tool.

Please refer to FIG. 5. In this embodiment, the management method further includes:
the management system obtaining a position of the garden tool at a preset time interval, for example, every 5 minutes, and displaying the position of the garden tool on the user interface, so that the management system can obtain position information of a last used tool, which is convenient for users to find tools.

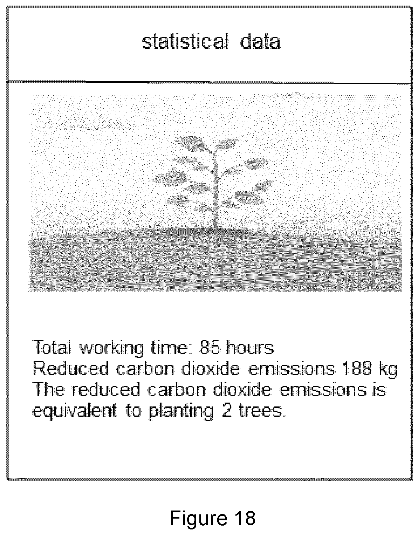

Please refer to FIG. FIG. 5 through FIG. 18. In this embodiment, the management method further includes:
the management system displaying an accumulated usage time of the garden tool and reduced carbon dioxide emissions on the user interface through the interface display module 50. In some other embodiments, a number of trees cut down equivalent to the carbon dioxide emissions reduced by the garden tools may also be displayed on the user interface, so that users can intuitively feel energy saving and emission reduction effects, which is conducive to improving their environmental awareness.

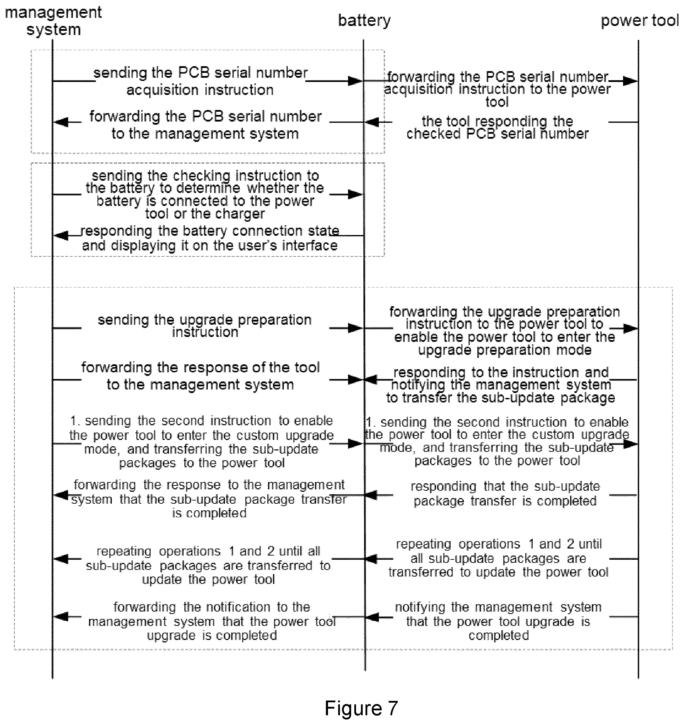

Please refer to FIG. 7. In this embodiment, the management method further includes:
the management system sending a PCB serial number acquisition instruction to the battery, and forwarding the PCB serial number acquisition instruction to the garden tool through the battery to obtain a PCB serial number of the garden tool, so that the user can view each battery and its corresponding garden tools, thus facilitating the user to manage the batteries and the garden tools. The management system will compare the obtained PCB serial number with data in a database to determine a type of the garden tool.

Please refer to FIG. 5. In this embodiment, the management method further includes:
sending an energy-saving instruction to the garden tool, and the garden tool returning to charge after receiving the energy-saving instruction, and automatically shutting down after completing a charging. In an embodiment, the energy-saving instruction is sent to the garden tool through the management system, and the garden tool returns to charge after receiving the energy-saving instruction, and automatically shuts down after completing the charging so as to disconnect the garden tool from the server and turn off all indication lights on the garden tool to save energy. In an embodiment, the server is used to save user data and forward instructions of the management system to the garden tool to drive the garden tool to execute corresponding instructions, and after the garden tool completes an execution of the corresponding instructions, an execution result is returned to the management system.

From the above embodiment, the user may remotely turn on an energy-saving mode through the management system, so that the mower returns to a charging station for charging, and automatically shuts down after being fully charged to prevent the battery from overcharging, which avoids increasing a battery loss, shortening the battery life, and wasting energy.

In summary, the disclosure provides the management method and system of the battery and the garden tool. The management system may enable users to intuitively view and check relevant information and state of the battery and/or garden tools. If there is an error in the battery and/or the garden tool, the user may be notified in time through the management system to improve its safety, which helps the user make better use of the garden tool. And the management system may upgrade the battery and/or the firmware of the garden tool. The management system may display the usage time of the wearing components in the user interface, so that the user may intuitively view the usage time of each wearing component, and the user can be promptly reminded to replace the wearing components, which helps the user to better manage and utilize the battery and garden tools.

The disclosure provides the management method and system of the battery and the garden tool. The user may remotely turn on the energy-saving mode through the management system, so that the mower returns to the charging station for charging, and automatically shuts down after being fully charged to prevent the battery from overcharging, which avoids increasing the battery loss, shortening the battery life, and wasting the energy.

Due to a short communication distance of the Bluetooth, a Bluetooth version of the IoT devices does not have remote diagnosis and remote technical support functions. When providing after-sales support for a Bluetooth IoT device, users need to carry them to an after-sales station for a technical support, or mail them back to a manufacturer. Efficiency of the after-sales support is low, cost of the after-sales support is high, and the user experience is poor.

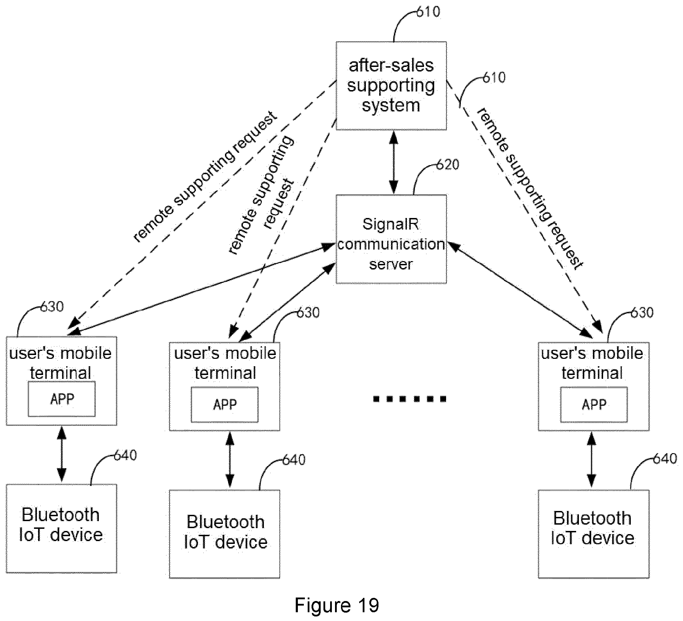

Based on this, embodiments of the disclosure provide a method of a remote technical support and diagnosis of the Bluetooth IoT devices, which may be applied in an application environment as shown in FIG. 19. Through a real-time communication technology of a real-time communication server 620, a secure and real-time two-way communication channel is established between an after-sales supporting system 610 and the user's mobile terminal 630 matched with a Bluetooth IoT device 640. When a user's mobile device 30 remains near the Bluetooth IoT device 640, an after-sales technical supporting staff may obtain various state data of the Bluetooth IoT device 640, conduct a remote diagnosis, and even remotely repair the device, thereby improving the efficiency of after-sales support, greatly reducing cost of after-sales support and maintenance, and greatly improving user's after-sales support experience. The after-sales supporting system 610, the real-time communication server 620, and the user's mobile terminal 630 are together included in a system of the remote technical support and diagnosis of the Bluetooth IoT device.

In an embodiment, the user's mobile terminal 630 includes a mobile phone, a tablet computer or other handheld devices with a Bluetooth function, which can perform a Bluetooth communication with the Bluetooth IoT device 640. An application program (APP) is installed on the user's mobile terminal 630. The application program (APP) has functions of reading state data of the Bluetooth IoT device 640 and writing and setting data to the Bluetooth IoT device 640, and the user connects to the Bluetooth IoT device 640 through the user's mobile terminal 630 with Bluetooth function and the application program (APP) installed on the user's mobile terminal 630, and interacts with the Bluetooth IoT device 640.

The real-time communication server 620 may be a SignalR communication server based on a SignalR communication technology provided by Microsoft. It can establish the secure and real-time two-way data communication channel between the user's mobile terminal 630 and the after-sales supporting system 610.

The after-sales supporting system 610 is used to provide the after-sales support for the Bluetooth IoT device 640. The after-sales supporting system 610 is configured to receive after-sales supporting requests from the after-sales technical supporting staff and create after-sales supporting cases according to the after-sales supporting requests. A remote supporting request containing a case number of the after-sales supporting case is sent to the user's mobile terminal 630 matched with the Bluetooth IoT device 640 that requires the after-sales support through an IoT platform. A front terminal of the after-sales supporting system 610 is connected to the real-time communication server 620 and joins the after-sales supporting case. When receiving a message that the user's mobile terminal 630 is connected to the real-time communication server 620 according to the case number and joins the after-sales supporting case, according to remote after-sales instructions of the after-sales technical supporting staff, the Bluetooth IoT device 640 that requires the after-sales support is connected through the Bluetooth function of the user's mobile terminal 630 to check or correct various state data information of the device.

The disclosure will be described in detail below through specific embodiments.

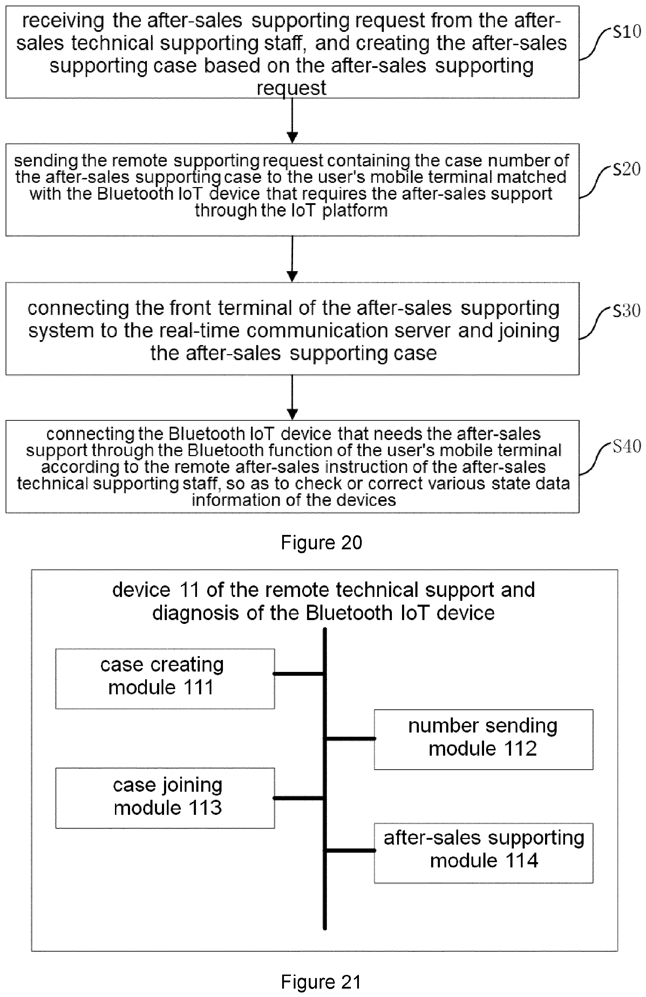

Please refer to FIG. 20. FIG. 20 is a schematic flowchart of the method of the remote technical support and diagnosis of the Bluetooth IoT device according to at least one embodiment of the disclosure. In the embodiment, the method of the remote technical support and diagnosis of the Bluetooth IoT device is applied to the after-sales supporting system 610. The method of the remote technical support and diagnosis of the Bluetooth IoT device includes following operations:
S10: receiving the after-sales supporting request from the after-sales technical supporting staff, and creating the after-sales supporting case based on the after-sales supporting request;
S20: sending the remote supporting request containing the case number of the after-sales supporting case the user's mobile terminal 630 matched with the Bluetooth IoT device 640 that requires the after-sales support through the IoT platform;
**S30:** connecting the front terminal of the after-sales supporting system 610 to the real-time communication server 620 and adding the after-sales supporting case; and
S40: when receiving the message that the user's mobile terminal 630 is connected to the real-time communication server 620 according to the case number and is added to the after-sales supporting case, connecting the Bluetooth IoT device 640 that needs the after-sales support through the Bluetooth function of the user's mobile terminal 630 according to the remote after-sales instruction of the after-sales technical supporting staff, so as to check or correct various state data information of the devices.

First, execute S10: receiving the after-sales supporting request from the after-sales technical supporting staff, and create the after-sales supporting case based on the after-sales supporting request.

When the user's Bluetooth IoT device 640 requires the after-sales support, a reservation may be made in the after-sales supporting system 610 to generate reservation information. The reservation information includes a device number of the Bluetooth IoT device 640 that requires the after-sales support. The after-sales technical supporting staff may initiate the after-sales supporting request for the Bluetooth IoT device 640 on the after-sales supporting system 610 according to the reservation information. The after-sales supporting request includes the device number of the Bluetooth IoT device 640 that requires after-sales support. The after-sales supporting system 610 receives the after-sales supporting request from the after-sales technical supporting staff, creates the after-sales supporting case according to the after-sales supporting requests, and records identity information of the after-sales technical supporting staff and the device number of the Bluetooth IoT device 640 that requires the after-sales support.

The Bluetooth IoT device 640 may be, for example, an electric mower, an electric chainsaw, an electric string trimmer, an electric snow blower, an electric pole saw, an electric blower, an electric hedge trimmer and other electric tools with the Bluetooth function, such as the electric mower. Of course, the Bluetooth IoT device 640 may also be a Bluetooth battery pack with the Bluetooth function.

Then, execute S20: sending the remote supporting request containing the case number of the after-sales supporting case the user's mobile terminal 630 matched with the Bluetooth IoT device 640 that requires the after-sales support through the IoT platform.

The after-sales supporting system 610 maintains a corresponding relationship between the device number of the Bluetooth IoT device 640 and the user's mobile terminal 630 (a terminal number) in advance. When the after-sales supporting system 610 receives the after-sales supporting request from the after-sales technical supporting staff, the user's mobile terminal 630 matched with the Bluetooth IoT device 640 that requires after-sales support may be obtained according to the device number in the after-sales supporting request, and through a message pushing function of the IoT platform, the remote supporting request containing the case number of the after-sales supporting case is sent to the user's mobile terminal 630 matched with the Bluetooth IoT device 640 that requires the after-sales support.

As an example, the message pushing function may be, for example, a Message Queuing Telemetry Transport (MQTT) function, so that the after-sales supporting system sends the remote supporting request containing the case number of the after-sales supporting case the user's mobile terminal 630 matched with the Bluetooth IoT device 640 that requires the after-sales support through the Message Queuing Telemetry Transport function of the IoT platform. In an embodiment, MQTT is a messaging protocol based on a publish/subscribe paradigm under an ISO standard (ISO/IEC PRF 20922). It works on a TCP/IP protocol suite and is a publish/subscribe messaging protocol designed for remote devices with low hardware performance and poor network conditions.

The user's mobile terminal 630 may be the mobile phone or the tablet computer, such as the mobile phone. Taking the mobile phone as an example, the terminal number may be the serial number of the mobile phone or an IMEI number of the mobile phone card groove. The after-sales supporting system 610 maintains the device number or the IMEI number of the mobile phone card groove of the Bluetooth IoT device 640 and a mobile phone serial number of the user's mobile phone matched with the Bluetooth IoT device 640. The device number of each Bluetooth IoT device 640 corresponds to one (of course it may be multiple) mobile phone serial number or the IMEI number of the mobile phone card groove. The device number of the Bluetooth IoT device 640 may be used to determine the mobile phone serial number or the IMEI number of the mobile phone card groove of the user's mobile phone matched with the Bluetooth IoT device 640, so that the remote supporting request containing the case number of the after-sales supporting case may be sent to the corresponding user's mobile phone through the message pushing function of the IoT platform.

Then, execute S30: connecting the front terminal of the after-sales supporting system 610 to the real-time communication server 620 and adding the after-sales supporting case.

After the after-sales supporting system 610 creating the after-sales supporting case, the front terminal of the after-sales supporting system 610 may be connected to the real-time communication server 620, join the after-sales supporting case, and wait for a connection of the user's mobile terminal 630. The real-time communication server 620 may be the SignalR communication server based on the SignalR communication technology provided by Microsoft. It can establish the secure and real-time two-way data communication channel between the user's mobile terminal 630 and the after-sales supporting system 610.

After the user's mobile terminal 630 receives a sending message of the remote supporting request containing the case number of the after-sales supporting case, a remote after-sales supporting authorization dialog box will pop up on the user's mobile terminal 630 and waits for the user to click to agree for the authorization. When it is detected that the user agrees to the authorization, the user's mobile terminal 630 is connected to the real-time communication server 620 according to the case number and joins the corresponding after-sales supporting case. The user's mobile terminal 630 sends a message to notify the after-sales supporting system 610 and identifies and locks the connected Bluetooth IoT device 640 to remind the user that the Bluetooth IoT device 640 is currently in a process of a remote support to prevent the user from misoperation during the process. By configuring a remote supporting authorization function, users' right to know may be guaranteed.

Finally, execute S40: when receiving the message that the user's mobile terminal 630 is connected to the real-time communication server 620 according to the case number and is added to the after-sales supporting case, connecting the Bluetooth IoT device 640 that needs the after-sales support through the Bluetooth function of the user's mobile terminal 630 according to the remote after-sales instruction of the after-sales technical supporting staff, so as to check or correct various state data information of the devices.

When the after-sales supporting system 610 receives the message that the user's mobile terminal 630 is connected to the real-time communication server 620 according to the case number and is added to the after-sales supporting case, this means that the communication channel between the after-sales supporting system 610 and the application program of the user's mobile terminal 630 is established. The after-sales technical supporting staff may connect the Bluetooth IoT device 640 that needs the after-sales support through the Bluetooth function of the user's mobile terminal 630, so as to check or correct various state data information of the devices (such as path configuration information, one-week timing, a device clock, a starting location, a battery level, etc.), thereby realizing the remote diagnosis and even a remote repair of the Bluetooth IoT device 640. After the after-sales support is over or when the user needs it, both the after-sales technical supporting staff and the user may actively end the remote connection. For reference, the after-sales technical supporting staff may call historical maintenance records of the Bluetooth IoT device 640 or historical usage data of the Bluetooth IoT device 640, so that the after-sales supporting staff may quickly repair the Bluetooth IoT device.

It should be noted that, before connecting the Bluetooth IoT device 640 that needs the after-sales support through the Bluetooth function of the user's mobile terminal 630 according to the remote after-sales instruction of the after-sales technical supporting staff to check or correct various state data information of the devices, a user's data authorization needs to be obtained first to protect the user's right to know and privacy. In an embodiment, through popping up an access license agreement interface on an interface of the user's mobile terminal 630, only after the user clicks to agree, the after-sales technical supporting staff may connect the Bluetooth IoT device 640 that needs the after-sales support through the Bluetooth function of the user's mobile terminal 630 to check or correct various state data information of the devices, thereby protecting the user's right to know and privacy.

**The** connection between the after-sales supporting system 610, the real-time communication server 620, and the application uses a standard encryption method based on TLS/SSL encryption, which is consistent with an encryption method of all current mainstream websites and is safe and reliable.

This disclosure utilizes a current connection between the user's mobile terminal 630, the application and the Bluetooth IoT device 640 to establish the secure, real-time, two-way communication channel between the after-sales supporting system 610 (a server terminal) and the application through the SignalR technology, which establishes a connection from the remote after-sales supporting system 610 to the user's Bluetooth IoT device 640, and enables the remote technical support and remote maintenance of the Bluetooth IoT device 640 to be possible. Through this disclosure, the cost of after-sales support and maintenance of the Bluetooth IoT device 640 is greatly reduced, and problems of the user's Bluetooth IoT device 640 may be analyzed through the remote diagnosis. The efficiency of after-sales support and maintenance of Bluetooth IoT device 640 is improved, and a direct on-site real-time diagnosis and repair is allowed. It greatly improves after-sales supporting experience for the Bluetooth IoT device 640. The User may enjoy the remote diagnosis and a remote maintenance support services without leaving home. They no longer need to carry bulky devices to remote after-sales maintenance stations and wait for weeks or even several months to get repaired devices back.

FIG. 21 is a functional module view of a device of the remote technical support and the remote diagnosis of the Bluetooth IoT device according to at least one embodiment of the disclosure. Please refer to FIG. 21. The device 11 of the remote technical support and diagnosis of the Bluetooth IoT device is applied to the after-sales supporting system 610, which includes a case creating module 111, a number sending module 112, a case joining module 113 and an after-sales supporting module 114.

In an embodiment, the case creating module 111 is used to receive the after-sales supporting requests from the after-sales technical supporting staff and create the after-sales supporting cases according to the after-sales supporting requests. The number sending module 112 is used to send the remote supporting request containing the case number of the after-sales supporting case to the user's mobile terminal 630 matched with the Bluetooth IoT device 640 that requires the after-sales support through an IoT platform. The case joining module 113 is used for the front terminal of the after-sales supporting system 610 to be connected to the real-time communication server 620 and join the after-sales supporting case. The after-sales supporting module 114 is configured to be connected, through the Bluetooth function of the user's mobile terminal 630 and according to remote after-sales instructions of the after-sales technical supporting staff, to the Bluetooth IoT device 640 that requires the after-sales support, so as to check or correct various state data information of the device after receiving the message that the user's mobile terminal 630 is connected to the real-time communication server 620 according to the case number and joins the after-sales supporting case.

It should be noted that, the device of the remote technical support and the diagnosis of the Bluetooth IoT device in this embodiment is a device corresponding to the method of the remote technical support and the remote diagnosis of the Bluetooth IoT device. Functional modules in the device of the remote technical support and the diagnosis of the Bluetooth IoT device may respectively correspond to the corresponding operations in the method of the remote technical support and the diagnosis of the Bluetooth IoT device. The device of the remote technical support and the diagnosis of the Bluetooth IoT device may be implemented in cooperation with the method of the remote technical support and the diagnosis of the Bluetooth IoT device. Correspondingly, relevant technical details mentioned in the device of the remote technical support and the diagnosis of the Bluetooth IoT device may also be applied in the method of the remote technical support and the diagnosis of the Bluetooth IoT device.

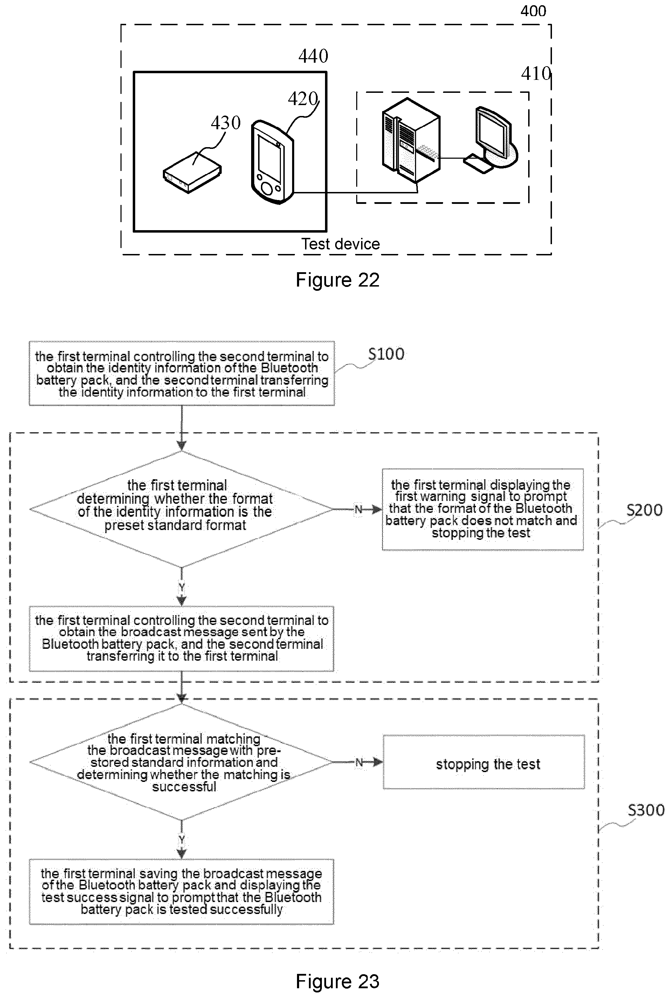

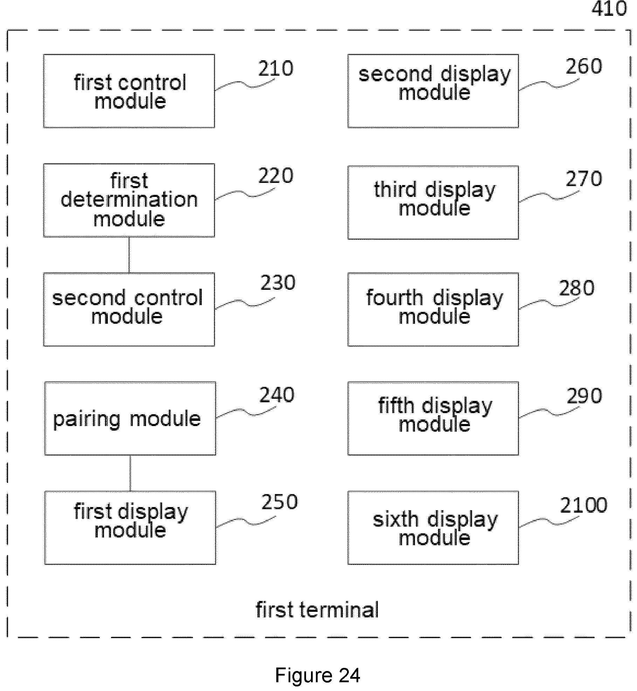

Please refer to FIG. 22 through FIG. 27. The disclosure provides a test device and a test method, which is used to solve problems of low efficiency, waste of human resources, errors in test results, etc. in Bluetooth battery pack test results in the conventional technology.

Please refer to FIG. 22. FIG. 22 is a schematic structural view of the test device 400 in this embodiment. The test device 400 is used to test the Bluetooth battery pack 430, which includes a first terminal 410, a second terminal 420 and a shielding box 440.

An outside of the shielding box 440 is provided with a first port, an inside of the shielding box 440 is provided with a second port, and the first port is communicated with the second port.

The first terminal 410 is arranged outside the shielding box 440 and is connected with the first port of the shielding box 440.

The second terminal 420 is arranged inside the shielding box 440 and is connected with the second port of the shielding box 440.

The shielding box 440 is set to shield external signals, so as to enable the second terminal 420 to only receive broadcast message of a Bluetooth battery pack arranged in the shielding box 440.

The second terminal 420 is wirelessly connected with the Bluetooth battery pack 430 arranged in the shielding box 440.

In an embodiment, the first terminal 410 may be any electronic product that may perform a human-computer interaction with the user, such as the personal computer, the tablet computer, the smart phone, a personal digital assistant (PDA), a game console, an interactive Internet protocol television (IPTV), a smart wearable device, etc.

In an embodiment, the second terminal 420 may be an electronic product with the communication function, for example, a smart terminal such as the mobile phone or a Bluetooth gateway, and the smart terminal such as the mobile phone or the Bluetooth gateway used by the second terminal 420 may be configured in advance to support a communication protocol corresponding to the Bluetooth battery pack 430.

In an embodiment, the Bluetooth battery pack 430 has the communication function, and after successfully communicating with the second terminal 420, the Bluetooth battery pack 430 may perform the data interaction with the second terminal 420 to implement a subsequent testing.

Please refer to FIG. 23. FIG. 23 is a schematic flowchart of the test method of the Bluetooth battery pack in an embodiment of the disclosure. The test method uses the test device 400, and the test method includes:
S100, the second terminal 420 receiving a first instruction sent by the first terminal 410, obtaining identity information of the Bluetooth battery pack 430 arranged in the shielding box 440 according to the first instruction, and transferring the identity information to the first terminal 410.

In an embodiment, the identity information of the Bluetooth battery pack 430 includes, for example, a corresponding product serial number, an MAC address and other information.

For example, a QR code is attached to the Bluetooth battery pack 430, and the QR code contains the identity information of the current Bluetooth battery pack 430. The staff uses the second terminal 420 to scan, such as the mobile phone to scan the QR code, or uses a scanner connected with the second terminal 420, such as a scanner connected with a computer to scan the QR code to obtain the identity information of the Bluetooth battery pack 430.

S200, the first terminal 410 determining whether a format of the identity information is a preset standard format:
if yes, the first terminal 410 outputting the second instruction to the second terminal 420, and the second terminal 420 obtaining the broadcast message sent by the Bluetooth battery pack 430 according to the second instruction and transferring it to the first terminal 410;
if not, stopping the test.

In S200, the format of the identity information being not the preset standard format and stopping the test includes:
the first terminal 410 displaying a first warning signal to prompt that the format of the Bluetooth battery pack 430 does not match.

It should be noted that, the first warning signal is, for example, a text prompt "the format of the battery pack does not match", and is displayed on a display screen, or a voice prompt "the format of the battery pack does not match", and is displayed through a voice player, or a red light prompt. This embodiment does not limit a content, form and method of displaying the first warning signal.

Further, after the second terminal 420 receives the second instruction, the operations before obtaining the broadcast message sent by the Bluetooth battery pack 430 include:
monitoring the broadcast message and determining a number of monitored broadcast messages:
if the number of the monitored broadcast messages is only one, obtaining the broadcast message sent by the Bluetooth battery pack 430;
if the number of the monitored broadcast messages is not only one, stopping the test.

In an embodiment, stopping the test if the number of the monitored broadcast messages is not only one includes:
the second terminal 420 determining the number of the monitored broadcast messages:
if a plurality of broadcast messages is monitored, the second terminal 420 outputting a third instruction to the first terminal 410, and the first terminal 410 displaying a second warning signal according to the third instruction to indicate that a signal shielding failure of the shielding box 440;
if the broadcast messages is not monitored, the second terminal 420 outputting a fourth instruction to the first terminal 410, and the first terminal 410 displaying a third warning signal according to the fourth instruction to prompt a communication failure of the Bluetooth battery pack 430.

In this embodiment, the Bluetooth battery pack 430 may send the broadcast message according to a first preset frequency for example, and the second terminal 420 monitors the broadcast message sent by the Bluetooth battery pack according to a second preset frequency for example. In an embodiment, the first preset frequency and the second preset frequency may be the same or different, and need to be determined according to actual conditions. In the prior art, the second terminal 420 will monitor the broadcast message of at least one Bluetooth battery pack during a monitoring process. At this time, it is necessary to manually filter out the broadcast message of the Bluetooth battery pack that needs to be tested, which will greatly reduce test efficiency and slow down a test process. In this embodiment, the shielding box 440 is used to shield the remaining Bluetooth battery packs that do not need to be tested, so that the monitoring process of the second terminal 420 can only monitor the broadcast message sent by the Bluetooth battery pack 430 in the shielding box 440, which realizes a one-to-one information interaction.

Furthermore, broadcast data sent by the Bluetooth battery pack 430 adopts a custom data format. In other words, each Bluetooth battery pack may customize a format of the broadcast data according to its own data transmission requirements, which is highly flexible.

It should be noted that, the second warning signal is, for example, a text prompt "signal shielding failure", and is displayed on the display screen, or a voice prompt "signal shielding failure", and is displayed through a voice player, or a yellow light prompt. This embodiment does not limit a content, form and method of displaying the second warning signal.

It should be noted that, the third warning signal is, for example, a text prompt "battery pack not obtained", and is displayed on the display screen, or a voice prompt "battery pack not obtained", and is displayed through the voice player, or a blue light prompt. This embodiment does not limit a content, form and method of displaying the third warning signal.

A premise of the second terminal 420 using the monitored broadcast message as the broadcast message of the Bluetooth battery pack 430 is that the second terminal 420 successfully establishes the communication connection with the Bluetooth battery pack 430. Therefore, before this operation, an operation that determining whether the second terminal 420 successfully establishes the communication connection with the Bluetooth battery pack 430 is performed and includes:
the second terminal 420 determining whether the communication connection is successfully established with the Bluetooth battery pack 430:
if yes, the second terminal 420 obtaining the monitored broadcast messages;
if no, the second terminal 420 outputting a fifth instruction to the first terminal 410, the first terminal 410 displaying a fourth warning signal according to the fifth instruction to prompt a connection failure of the Bluetooth battery pack 430, and stopping the test.

It should be noted that, the fourth warning signal is, for example, a text prompt "battery pack connection failed", and is displayed on the display screen, or a voice prompt "battery pack connection failed", and is displayed through the voice player, or a green light prompt. This embodiment does not limit a content, form and method of displaying the fourth warning signal.

S200 is used to test whether a format of the identity information of the Bluetooth battery pack 430 meets the preset standard format, and whether a Bluetooth connection function is normal.

S300, the first terminal 410 matching the broadcast message with pre-stored standard information:
if the match is successful, the first terminal 410 saving the broadcast message of the Bluetooth battery pack 430 and displaying a test success signal to prompt that the Bluetooth battery pack 430 is tested successfully;
If the match fails, stopping the test.

It should be noted that, the test success signal is, for example, a text prompt "test success", and is displayed on the display screen, or a voice prompt "test success", and is displayed through the voice player, or an orange light prompt. This embodiment does not limit a content, form and method of displaying the test success signal.

In an embodiment, the broadcast message includes, for example, registration information and parameter information of the Bluetooth battery pack 430. In an embodiment, the registration information includes, for example, the MAC address of the Bluetooth battery pack 430. The parameter information includes a current power, a temperature, a number of series, a number of parallel, a voltage, a current and other information of the Bluetooth battery pack 430 as well as a brand of the Bluetooth battery pack, a battery model and other information.

In an embodiment, the standard information includes standard registration information and standard parameter range. In an embodiment, the standard registration information includes, for example, a plurality of pre-stored MAC addresses. The standard parameter range includes, for example, a standard power range, a standard temperature range, a standard current range and other information.

Further, the first terminal 410 matching the broadcast message with pre-stored standard information includes:
the first terminal 410 matching the registration information of the Bluetooth battery pack 430 with the standard registration information, and determining whether the match is successful:
if successful, then further determining whether the parameter information of the Bluetooth battery pack 430 meets the standard parameter range, if yes, considering the match is successful, if not, considering the match fails;
if not successful, the first terminal 410 displaying the fifth warning signal to prompt that the Bluetooth battery pack 430 is an unregistered battery pack, and stopping the test.

It should be noted that, the fifth warning signal is, for example, a text prompt "unregistered battery pack", and is displayed on the display screen, or a voice prompt "unregistered battery pack", and is displayed through the voice player, or a violet light prompt. This embodiment does not limit a content, form and method of displaying the fifth warning signal.

In an embodiment, considering the match fails if it does not meet includes:
the first terminal 410 displaying a sixth warning signal to prompt that parameters of the Bluetooth battery pack 430 are abnormal.

In an embodiment, the first terminal 410 prompts specific abnormal parameters through the sixth warning signal, for example.

It should be noted that, the sixth warning signal is, for example, a text prompt "parameter abnormality", and is displayed on the display screen, or a voice prompt "parameter abnormality", and is displayed through the voice player, or a pink light prompt. This embodiment does not limit a content, form and method of displaying the sixth warning signal.

The parameter abnormality includes, for example, that the current power of the Bluetooth battery pack 430 exceeds the standard power range, the current temperature of the Bluetooth battery pack 430 exceeds the standard temperature range, and the like.

In an embodiment, the registration information of the Bluetooth battery pack includes the MAC address, and the standard registration information includes a plurality of standard MAC addresses.

The first terminal 410 matching the registration information of the Bluetooth battery pack 430 with the standard registration information, and determining whether the match is successful includes:
determining whether the MAC address corresponding to the Bluetooth battery pack 430 is the same as one of the plurality of standard MAC addresses, if there is the same standard MAC address, matching successfully, otherwise, the match failing.

After the test is successful, the first terminal 410 stores the broadcast message of the Bluetooth battery pack 430 in a preset table and assigns a randomly generated test number to the broadcast message of the Bluetooth battery pack 430 in sequence to distinguish different Bluetooth battery packs that have successfully tested. And when generating the test number of the current Bluetooth battery pack 430, the test number generated this time will be compared with the other test numbers in the table. If there is the test number with a same value, the test number is discarded and a new test number is generated until the generated test number has a new value.

S300 is used to test whether the Bluetooth battery pack has been registered and whether the parameter information meets the standard parameter range.

Further, it should be noted that, in this embodiment, the first warning signal, the second warning signal, the third warning signal, the fourth warning signal, the fifth warning signal, the sixth warning signal and the test success signal should be distinguished accordingly to avoid users being confused about the corresponding prompts.

For example, in an actual test process, a process of testing the Bluetooth battery pack using the above test method includes that the staff scans the QR code on the Bluetooth battery pack with their mobile phone to obtain the identity information of the Bluetooth battery pack. If the identity information meets the pre-stored standard format, the staff puts the Bluetooth battery pack and the mobile phone into the shielding box, uses a USB data cable to connect the mobile phone to the second port inside the shielding box, and connect an external computer to the first port outside the shielding box. At this time, a Bluetooth switch on the Bluetooth battery pack is turned on, so that the Bluetooth battery pack can send the broadcast message at the first preset frequency, and a Bluetooth connection function of the mobile phone is turned on, so that the mobile phone can monitor the broadcast message of the Bluetooth battery pack at the second preset frequency. Then the shielding box is closed. If the Bluetooth battery pack can be successfully connected, the Bluetooth connection function of the Bluetooth battery pack is tested to be normal. Further, after the connection is successful, the broadcast message of the Bluetooth battery pack is obtained. If the MAC address carried in the broadcast message matches any MAC address contained in the pre-stored registration information, it may be tested that the Bluetooth battery pack has been registered. If the parameter information carried in the broadcast message meets the standard parameter range, it may be tested that the parameters of the Bluetooth battery pack are normal. At this time, the test is finished and the broadcast message of the Bluetooth battery pack is stored in the preset table. This table is used to store the broadcast message of the Bluetooth battery packs tested successfully. Then the staff can use this table to check the Bluetooth battery packs that have been tested and have a successful test result.

It should be noted that, operations of the above methods are divided only for a clear description. When implementing, they may be combined into one operation or some operations can be split into a plurality of operations. As long as they contain a same logical relationship, they are within a protection scope of this disclosure. Adding insignificant modifications to an algorithm or a process or introducing insignificant designs without changing a core design of the algorithm and process are all within the protection scope of this disclosure.

Corresponding to the above-mentioned test method, it may be known that the first terminal 410 in the test device 400 includes a first control module 210, a first determination module 220, a second control module 230, a pairing module 240 and a first display module 250.

The first control module 210 is used to output the first instruction to the second terminal 420.

The first determination module 220 is used to receive the identity information sent by the second terminal 420, determine whether the format thereof is the preset standard format, and obtain a first determination result.

The second control module 230 is used to output the second instruction to the second terminal 420 when the first determination result indicates that the format of the identity information is the preset standard format.

The pairing module 240 is used to receive the broadcast message sent by the second terminal 420, match it with the pre-stored standard information, and determine whether the match is successful to obtain a second determination result.

The first display module 250 is used to save the broadcast message of the Bluetooth battery pack 430 and display the test success signal when the second determination result indicates that the broadcast message matches the pre-stored standard information successfully.

It should be noted that, the test success signal is, for example, the text prompt "test success", and is displayed on the display screen, or the voice prompt "test success", and is displayed through the voice player, or the orange light prompt. This embodiment does not limit the content, the form and the method of displaying the test success signal.

In an embodiment, the broadcast message includes, for example, registration information and parameter information of the Bluetooth battery pack 430. In an embodiment, the registration information includes, for example, the MAC address of the Bluetooth battery pack 430. The parameter information includes a current power, a temperature, a number of series, a number of parallel, a voltage, a current and other information of the Bluetooth battery pack 430 as well as a brand of the Bluetooth battery pack, a battery model and other information.

In an embodiment, the standard information includes the standard registration information and the standard parameter range. In an embodiment, the standard registration information includes, for example, the plurality of pre-stored MAC addresses. The standard parameter range includes, for example, the standard power range, the standard temperature range, the standard current range and other information.

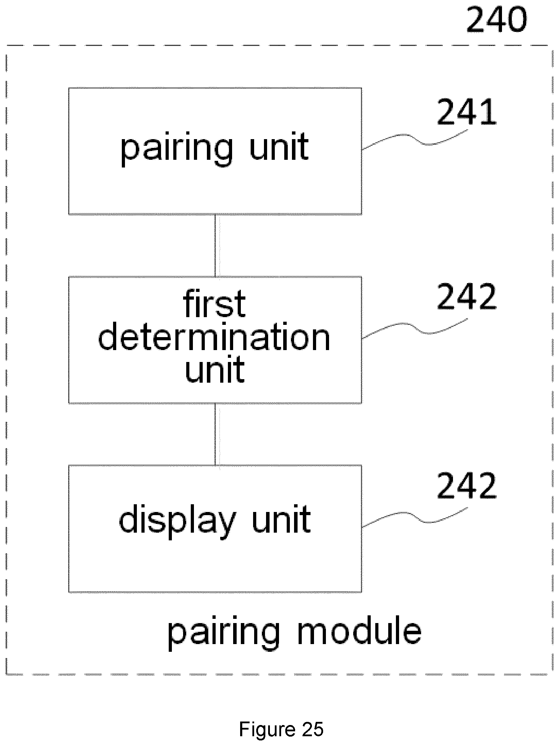

Please refer to FIG. 25. In an embodiment, the pairing module 240 includes a pairing unit 241, a first determination unit 242 and a display unit 243.

The pairing unit 241 is used to match the registration information of the Bluetooth battery pack 430 with the standard registration information, and determines whether the match is successful.

The first determination unit 242 is used to determine whether the registration information of the Bluetooth battery pack 430 matches the standard registration information successfully, and further determine whether the parameter information of the Bluetooth battery pack 430 meets the standard parameter range. If yes, the match is successful, if not, the match fails.

The display unit 243 is used to display the fifth warning signal when the registration information of the Bluetooth battery pack 430 fails to match the standard registration information, so as to prompt that the Bluetooth battery pack 430 is the unregistered battery pack.

It should be noted that, the fifth warning signal is, for example, the text prompt "unregistered battery pack", and is displayed on the display screen, or the voice prompt "unregistered battery pack", and is displayed through the voice player, or the violet light prompt. This embodiment does not limit the content, form and method of displaying the fifth warning signal.

In an embodiment, the first determination unit 242 is used to:
matching the plurality of the MAC addresses included in the standard registration information according to the MAC address included in the registration information of the Bluetooth battery pack 430, and determining whether they match each other, if they match, consider the match is successful, if not, consider the match failed.

In an embodiment, the first terminal 410 further includes a second display module 260, a third display module 270, a fourth display module 280, a fifth display module 290 and a six display module 2100.

The second display module 260 is used to display the first warning signal when the format of the identity information of the Bluetooth battery pack 430 is not the preset standard format, so as to prompt that the format of the Bluetooth battery pack 430 does not match.

The third display module 270 is used to receive the third instruction output by the second terminal 420 and display the second warning signal according to the third instruction to prompt the signal shielding failure of the shielding box 440.

The fourth display module 280 is used to receive the fourth instruction output by the second terminal 420, and display the third warning signal according to the fourth instruction to prompt the communication failure of the Bluetooth battery pack 430.

The fifth display module 290 is used to receive the fifth instruction output by the second terminal 420 and display the fourth warning signal according to the fifth instruction to prompt that the connection failure of the Bluetooth battery pack 430.

The six display module 2100 is used to display the sixth warning signal to prompt that the parameters of the Bluetooth battery pack 430 are abnormal.

It should be noted that, the first warning signal is, for example, the text prompt "the format of the battery pack does not match", and is displayed on the display screen, or the voice prompt "the format of the battery pack does not match", and is displayed through the voice player, or the red light prompt. This embodiment does not limit the content, form and method of displaying the first warning signal.

It should be noted that, the second warning signal is, for example, the text prompt "signal shielding failure", and is displayed on the display screen, or the voice prompt "signal shielding failure", and is displayed through the voice player, or the yellow light prompt. This embodiment does not limit the content, form and method of displaying the second warning signal.

It should be noted that, the third warning signal is, for example, the text prompt "battery pack not obtained", and is displayed on the display screen, or the voice prompt "battery pack not obtained", and is displayed through the voice player, or the blue light prompt. This embodiment does not limit the content, form and method of displaying the third warning signal.

It should be noted that, the fourth warning signal is, for example, the text prompt "battery pack connection failed", and is displayed on the display screen, or the voice prompt "battery pack connection failed", and is displayed through the voice player, or the green light prompt. This embodiment does not limit the content, form and method of displaying the fourth warning signal.

It should be noted that, the sixth warning signal is, for example, the text prompt "parameter abnormality", and is displayed on the display screen, or the voice prompt "parameter abnormality", and is displayed through the voice player, or the pink light prompt. This embodiment does not limit the content, form and method of displaying the sixth warning signal.

Further, it should be noted that, in this embodiment, the first warning signal, the second warning signal, the third warning signal, the fourth warning signal, the fifth warning signal, the sixth warning signal and the test success signal should be distinguished accordingly to avoid users being confused about the corresponding prompts.

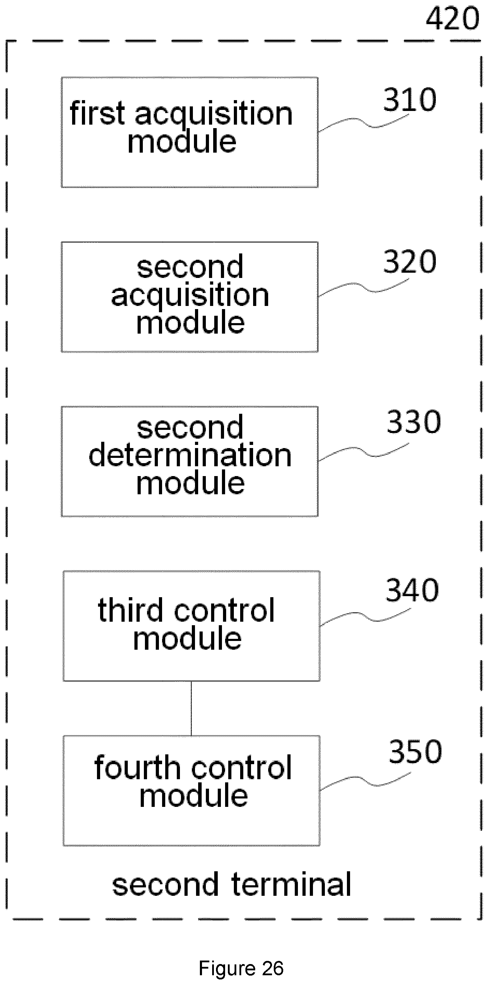

Please refer to FIG. 26. The second terminal 420 in the test device 400 includes a first acquisition module 310 and a second acquisition module 320.

The first acquisition module 310 is used to receive the first instruction sent by the first terminal 410, obtain the identity information of the Bluetooth battery pack 430 according to the first instruction and transfer it to the first terminal.

The second acquisition module 320 is used to receive the second instruction sent by the first terminal 410, obtain the broadcast message sent by the Bluetooth battery pack 430 according to the second instruction and transfer the broadcast message to the first terminal 410.

In an embodiment, the second terminal 420 further includes a second determination module 330.

The second determination module 330 is used to monitor the broadcast message and determine the number of the monitored broadcast message before obtaining the broadcast message sent by the Bluetooth battery pack 430 and after the second acquisition module 320 receives the second instruction. If the number of the monitored broadcast messages is only one, the broadcast message sent by the Bluetooth battery pack 430 is obtained. If the number of the monitored broadcast messages is not only one, the test is stopped.

In an embodiment, the second determination module 330 includes a second determination unit 331, an acquisition unit 332 and a control unit 333.

The second determination unit 331 is used to determine whether the communication connection is successfully established with the Bluetooth battery pack 430.

The acquisition unit 332 is used to obtain the monitored broadcast messages when the connection is successfully established.

The control unit 333 is used to output the fifth instruction to the first terminal 410 when the connection is not successfully established. The first terminal 410 displays the fourth warning signal according to the fifth instruction to prompt that the Bluetooth battery pack 430 has the connection failure and the test is stopped.

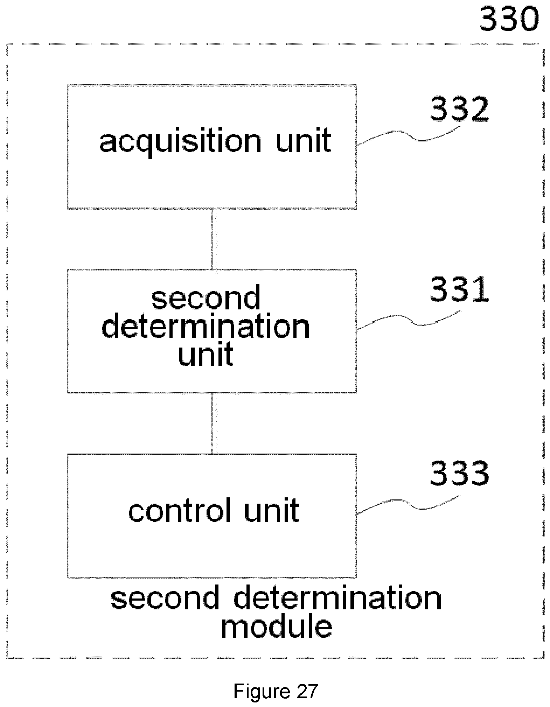

Please refer to FIG. 27. Further, the second terminal 420 further includes a third control module 340 and a fourth control module 350.

The third control module 340 is used to output the third instruction to the first terminal 410 when a plurality of broadcast messages is monitored, and the first terminal 410 displaying the second warning signal according to the third instruction to prompt the signal shielding failure of the shielding box 440.

The fourth control module 350 is used to output the fourth instruction to the first terminal 410 when the broadcast messages is not monitored, and the first terminal 410 displaying the third warning signal according to the fourth instruction to prompt the communication failure of the Bluetooth battery pack 430.

**The** modules in the above embodiments, such as the modules and units of the first terminal 410 and the second terminal 420, are divided only for a clear description, and in actual implementation, they may be fully or partially integrated into one physical entity, or may be physically separated. And these modules may all be implemented in a form of software calling through processing elements, or all be implemented in a form of hardwares, or some modules may be implemented in the form of the software calling through processing elements, and some modules are implemented in the form of the hardware. For example, the module may be a separately established processing element, or it may be integrated into a chip of the above-mentioned device. In addition, it may be stored in a memory of the above-mentioned device in a form of a program code, and called and executed by a processing element of the above-mentioned device. Implementations of other modules are similar. In addition, all or part of these modules may be integrated together or implemented independently. The processing elements described here may be a kind of integrated circuit having a signal processing capability. During the implementation process, each operation of the above method or each module above may be completed by an integrated logic circuit of hardware in a processor element or instructions in a software form. Adding insignificant modifications to the module structure or introducing insignificant designs that do not change the core design of its module structure are all within the protection scope of this disclosure.

The disclosure provides the test device and the test method to realize a test automation of Bluetooth battery pack. During the test, it can be automatically tested whether the Bluetooth battery pack has been registered, whether the Bluetooth connection function is normal, and whether the parameter information meets the standard parameter range. After the test is completed, the broadcast information of the Bluetooth battery pack tested successfully can be automatically stored. This reduces manual operations in the test process of the Bluetooth battery pack connection, avoids manual collections and data collations after the test, which saves human resources and improves test efficiency. Therefore, the disclosure effectively overcomes various shortcomings in the prior art, thereby having a high utilization value.

The above embodiments only illustrate principles and effects of the disclosure, but are not intended to limit the disclosure. Anyone familiar with this technology may modify or change the above embodiments without departing from a scope of the disclosure. Therefore, all equivalent modifications or changes made by those with ordinary knowledge in the technical field without departing from the technical ideas disclosed in the disclosure shall still be covered by the claims of the disclosure.

## Claims

1. A matching method for an application program (APP), comprising:
receiving a broadcast signal sent by a garden tool, decoding the broadcast signal, determining an identification code of the garden tool;
calling a core application programming interface API according to the identification code to obtain a key string of the garden tool;
combining the key string and an encryption key pre-stored on the APP to obtain a matching command;
receiving an input verification password, encrypting the matching command with the verification password ; and
sending the encrypted matching command to the garden tool.

2. The matching method according to claim 1, wherein
the key string and the encryption key are pre-stored on a web-based information platform; and
the APP obtains and saves the encryption key from the web-based information platform by calling the API.

3. The matching method according to claim 2, wherein, combining the key string and the encryption key pre-stored on the APP to obtain the matching command further comprises:
performing a bit addition to the key string and the encryption key pre-stored on the APP to obtain the matching command.

4. The matching method according to claim 1, wherein, encrypting the matching command with the verification password comprises:
encrypting the matching command with the verification password through an AES encryption algorithm.

5. The matching method according to claim 1, wherein, sending the encrypted matching command to the garden tool comprises:
adopting a preset protocol, combining the encrypted matching command and the preset protocol into a command frame and sending the command frame to the garden tool;
wherein, the preset protocol comprises: a fixed message header and a variable message header.

6. A matching method for an garden tool, comprising:
receiving an encrypted matching command sent by an APP, decrypting the encrypted matching with a pre-stored decryption key command and determining the matching command;
decoding the matching command to obtain a key string and an encryption key; and
verifying whether the key string and the encryption key are consistent with a pre-stored matching information:
if consistent, interacting data with the APP,
otherwise, disconnecting a communication connection with the APP.

7. The matching method according to claim 6, further comprising:
determining whether receiving the encrypted matching command sent by the APP within a preset time after booting:
if yes, decrypting the encrypted matching command according to the pre-stored decryption key;
if not, disconnecting the communication connection with the APP.

8. A matching system, comprising an APP and a garden tool capable of communication connection, wherein,
the APP is configured to:
receive a broadcast signal sent by the garden tool, decode the broadcast signal, determine an identification code of the garden tool;
call a core application programming interface API according to the identification code to obtain a key string of the garden tool;
combine the key string and an encryption key pre-stored on the APP to obtain a matching command;
receive an input verification password, encrypt the matching command with the verification password; and
send an encrypted matching command to the garden tool; and
the garden tool is configured to:
receiving an encrypted matching command sent by an APP decrypting the encrypted matching command with a pre-stored decryption key and obtain the matching command;
verify whether the key string and the encryption key are consistent with a pre-stored matching information:
if consistent, interact data with the APP,
otherwise, disconnect a communication connection with the APP.

9. A management method of a battery and a garden tool, comprising:
matching a management system with the battery and/or the garden tool to establish a communication between the management system and the battery and/or the garden tool;
sending a checking instruction to the battery and/or the garden tool , and obtaining first information of the battery and/or the garden tool; and
determining whether a state of the battery and/or the garden tool is normal, and displaying the state in a user interface.

10. The management method of the battery and the garden tool according to claim 9, wherein, the first information of the battery comprises a temperature of the battery, power of the battery and a locked state of the battery, and the first information of the garden tool comprises total power, a cutting mode, a motor state, an angle sensor state, a speed, current continuous working time, and working time of remaining power of the garden tool.

11. The management method of the battery and the garden tool according to claim 9, wherein, the management method further comprises updating a firmware of the battery and/or the garden tool by sending a firmware upgrade instruction to the battery and/or the garden tool, which comprises:
obtaining a current firmware version of the battery and/or the garden tool, and
determining whether the current firmware version is a latest version;
if not, obtaining an update package of the latest version, sending the firmware upgrade instruction to the battery and/or the garden tool to enable the battery and/or the garden tool to enter an updating mode;
sending the update package to the battery and/or the garden tool; and
obtaining an updating progress of the battery and/or the garden tool, and displaying the updating progress in the user interface.

12. The management method of the battery and the garden tool according to claim 9, further comprising:
sending a PCB serial number acquisition instruction to the battery, and forwarding the PCB serial number acquisition instruction to the garden tool through the battery to obtain a PCB serial number of the garden tool, so as to obtain each battery and the corresponding garden tool;
sending the checking instruction to the battery to obtain a connecting state of the battery and the garden tool or a connecting state of the battery and a charger; and
updating the firmware of the garden tool by sending a firmware upgrade instruction to the garden tool through the battery.

13. The management method of the battery and the garden tool according to claim 9, further comprising:
obtaining a usage time of wearing components of the garden tool, and determining
whether the usage time is greater than a preset replacement time;
if yes, notifying a user to replace the wearing component, and after completing a replacement, the management system recalculating the usage time of the wearing component.

14. The management method of the battery and the garden tool according to claim 9, further comprising:
sending an energy-saving instruction to the garden tool, and the garden tool returning to charge after receiving the energy-saving instruction, and automatically shutting down after completing a charging.

15. A management system of a battery and a garden tool, comprising:
a matching module, matching the management system with the battery and/or the garden tool to establish a communication between the management system and the battery and/or the garden tool;
an information checking module, sending a checking instruction to the battery and/or the garden tool to obtain first information of the battery and/or the garden tool, determining whether a state of the battery and/or the garden tool is normal, and displaying the state in a user interface; and
an interface displaying module, configured to display the first information, the state of the battery and/or the garden tool.

16. A method of a remote technical support and diagnosis of a Bluetooth Internet of Things (IoT) device, applied to an after-sales supporting system, and comprising:
receiving an after-sales supporting request from an after-sales technical supporting staff, and creating an after-sales supporting case based on the after-sales supporting request;
sending a remote supporting request containing a case number of the after-sales supporting case to a user's mobile terminal matched with the Bluetooth IoT device that requires an after-sales support through an IoT platform;
connecting a front terminal of the after-sales supporting system to a real-time communication server and adding the after-sales supporting case; and
when receiving a message that the user's mobile terminal is connected to the real-time communication server according to the case number and is added to the after-sales supporting case, connecting the Bluetooth IoT device that needs the after-sales support through a Bluetooth function of the user's mobile terminal according to a remote after-sales instruction of the after-sales technical supporting staff, so as to check or correct various state data information of the device.

17. The method of the remote technical support and diagnosis of the Bluetooth IoT device according to claim 16, wherein, the after-sales supporting request comprises a device number of the Bluetooth IoT device that needs the after-sales support, and a corresponding relationship between the device number of the IoT device and the user's mobile terminal is maintained in the after-sales supporting system;
sending the remote supporting request containing the case number of the after-sales supporting case to the user's mobile terminal matched with the Bluetooth IoT device that requires the after-sales support through the IoT platform comprises:
obtaining the user's mobile terminal matched with the Bluetooth IoT device that requires the after-sales support through the device number, and
sending the remote supporting request containing the case number of the after-sales supporting case to the user's mobile terminal matched with the Bluetooth IoT device that requires the after-sales support through an information pushing function of the IoT platform.

18. A device of a remote technical support and diagnosis of a Bluetooth IoT device, applied to an after-sales supporting system, and comprising:
a case creation module, configured to receive an after-sales supporting request from an after-sales technical supporting staff, and create an after-sales supporting case based on the after-sales supporting request;
a number sending module, configured to send a remote supporting request containing a case number of the after-sales supporting case to a user's mobile terminal matched with the Bluetooth IoT device that requires an after-sales support through an IoT platform;
a case adding module, configured to connect a front terminal of the after-sales supporting system to a real-time communication server and add the after-sales supporting case; and
an after-sales supporting module, configured to connect the Bluetooth IoT device that needs the after-sales support through a Bluetooth function of the user's mobile terminal according to a remote after-sales instruction of the after-sales technical supporting staff when receiving a message that the user's mobile terminal is connected to the real-time communication server according to the case number and is added to the after-sales supporting case, so as to check or correct various state data information of the device.

19. A system of a remote technical support and diagnosis of a Bluetooth IoT device, comprising:
a user's mobile terminal;
a real-time communication server; and
an after-sales supporting system, configured to:
receive an after-sales supporting request from an after-sales technical supporting staff, and create an after-sales supporting case based on the after-sales supporting request;
send a remote supporting request containing a case number of the after-sales supporting case to a user's mobile terminal matched with the Bluetooth IoT device that requires an after-sales support through an IoT platform;
connect a front terminal of the after-sales supporting system to the real-time communication server and add the after-sales supporting case; and
when receiving a message that the user's mobile terminal is connected to the real-time communication server according to the case number and is added to the after-sales supporting case, connecting the Bluetooth IoT device that needs the after-sales support through a Bluetooth function of the user's mobile terminal according to a remote after-sales instruction of the after-sales technical supporting staff, so as to check or correct various state data information of the device.

20. A test device, configured to test a Bluetooth battery pack, comprising a first terminal, a second terminal and a shielding box; wherein,
an outside of the shielding box is provided with a first port, an inside of the shielding box is provided with a second port, and the first port is communicated with the second port;
the first terminal is arranged outside the shielding box and is connected with the first port of the shielding box;
the second terminal is arranged inside the shielding box and is connected with the second port of the shielding box;
the shielding box is configured to shield external signals, so as to enable the second terminal to only receive broadcast message of the Bluetooth battery pack arranged in the shielding box; and
the second terminal is wirelessly connected with the Bluetooth battery pack arranged in the shielding box.
